# EUROPÄISCHE PATENTSCHRIFT

(11) **EP 3 177 474 B1**
(45) Veröffentlichungstag und Bekanntmachung des Hinweises auf die Patenterteilung: **25.11.2020**
(21) Anmeldenummer: 15747462.8
(22) Anmeldetag: 04.08.2015
(51) Int. Cl.: B60K 31/00

(54) **VERFAHREN ZUM ERZEUGEN EINER UMGEBUNGSKARTE SOWIE FAHRERASSISTENZSYSTEM**
METHOD FOR GENERATING A SURROUNDINGS MAP, AND DRIVER ASSISTANCE SYSTEM
PROCÉDÉ DE GÉNÉRATION D'UNE CARTE ENVIRONNANTE ET SYSTÈME D'AIDE À LA CONDUITE

(30) Priorität: 05.08.2014 DE 102014111127
(43) Veröffentlichungstag der Anmeldung: 14.06.2017
(73) Patentinhaber: Valeo Schalter und Sensoren GmbH, 74321 Bietigheim-Bissingen (DE)
(72) Erfinder: BARIANT, Jean-Francois, 74321 Bietigheim-Bissingen (DE); HEIMBERGER, Markus, 74321 Bietigheim-Bissingen (DE); GEIGER, Roland, 74321 Bietigheim-Bissingen (DE); MICHAEL, Anto, 74321 Bietigheim-Bissingen (DE)
(74) Vertreter: Pothmann, Karsten
(86) Internationale Anmeldenummer: PCT/EP2015/067869
(87) Internationale Veröffentlichungsnummer: WO 2016/020342

(56) Entgegenhaltungen:
- DE-A1- 10 026 586
- DE-A1-102012 208 302
- FR-A1- 2 562 265

## Beschreibung

Die Erfindung betrifft ein Verfahren zum Erzeugen einer Umgebungskarte eines Umgebungsbereichs eines Kraftfahrzeugs, bei welchem der Umgebungsbereich mit zumindest einem kraftfahrzeugseitigen Sensor erfasst wird. Des Weiteren betrifft die Erfindung ein Fahrerassistenzsystem mit zumindest einem Sensor und einer Auswerteeinheit.

Ein Verfahren zur Erfassung einer Umgebung eines Fahrzeugs und Aktualisierung einer Umgebungskarte wird in der Druckschrift DE 10 2005 026 386 A1 gezeigt.

Ultraschallsensoren sind in der Kraftfahrzeugtechnik hinlänglich bekannt. Mittels dieser spezifischen Sensortypen wird die Umgebung des Kraftfahrzeugs erfasst und abhängig davon beispielsweise eine geeignete Parklücke erkannt. Bei neueren Anwendungen ist auch vorgesehen, dass auf einer Anzeigeeinheit die Umgebung des Kraftfahrzeugs anhand der durch die Ultraschallsensoren detektierten Informationen wiedergegeben und somit angezeigt wird. Derartige Umgebungskarten können beispielsweise als vektorielle Karten oder als Gitterkarten erzeugt werden. Abhängig von einem Abstand eines kraftfahrzeugseitigen Ultraschallsensors zu einem Objekt ist dann ein spezifischer Freiraum ausgebildet.

Es ist jedoch auch bekannt, dass Ultraschallsensoren in spezifischen Situationen Unwägbarkeiten bezüglich der Detektionsgenauigkeit bzw. Detektionsrate aufweisen. Diese basieren insbesondere auch auf physikalischen Grenzen dieser Ultraschalltechnik. So ist beispielsweise bekannt, dass die Detektionsrate von Objekten mittels Ultraschallsensoren auch von der Formgebung der Objekte abhängt. So können kleinere Objekte verbessert in einem Nahbereich zu den Ultraschallsensoren detektiert werden. Je größer somit entsprechende Objekte sind, umso besser, das heißt "stabiler" und überhaupt, können sie in der Regel auch in einem größeren Abstand zum Ultraschallsensor erfasst werden. Darüber hinaus sind beispielsweise auch sehr eckige Objekte schwieriger durch die Ultraschallsensoren zu erfassen als weniger eckige.

Darüber hinaus ist auch die Position des Ultraschallsensors zum detektierenden Objekt ein Aspekt, der auf die Detektionsgenauigkeit bzw. die Detektionsrate einwirkt. Eine sehr genaue Detektion ist beispielsweise dann erreichbar, wenn eine Hauptachse des Ultraschallsensors und somit einer ausgesandten Ultraschallkeule möglichst senkrecht zum zu detektierenden Objekt orientiert ist. Somit wird die Detektionsgenauigkeit schlechter, je spitzer ein Winkel zwischen einem einfallenden Ultraschallsignal und dem zu detektierenden Objekt ist. Ein Ultraschallsensor misst radial und ist daher betreffend der Winkelgenauigkeit ungenau.

Darüber hinaus ist es mit Ultraschallsignalen nicht möglich, durch ein Objekt quasi hindurchzublicken, wie dies beispielsweise bei Röntgenstrahlen der Fall ist. Daraus kann sich die Situation ergeben, dass zwar kein hohes Objekt zwischen einem Ultraschallsensor und einem detektierten Objekt auftreten kann, allerdings diesbezüglich sehr niedrige Objekte zwischen dem Ultraschallsensor und dem erfassten Objekt angeordnet sein können, die dann jedoch nicht erfasst werden.

Darüber hinaus ist es mit Ultraschallsensoren nicht möglich, eine relative Geschwindigkeit eines Objekts, welches sich im Wesentlichen senkrecht zu der oben genannten Sensorhauptachse bewegt, genau zu erfassen. Dies kann beispielsweise bei Objekten auftreten, die sich an der Seite zu einem Kraftfahrzeug bewegen, es kann jedoch auch dann auftreten, wenn Objekte die Fahrtrichtung des Kraftfahrzeugs queren.

Aufgrund dieser technischen Limitierungen von Ultraschallsensoren tritt bei herkömmlichen Ausgestaltungen das Problem auf, dass auf erzeugten Umgebungskarten Objekte fälschlich angezeigt werden und/oder im Hinblick auf das bereits erfolgte weitere Fortbewegen des Kraftfahrzeugs im Vergleich zu einer aktuell angezeigten Umgebungskarte Objekte örtlich anderweitig sich ergeben oder nicht mehr aktuell sind. Bei der herkömmlichen dynamischen Anzeige von Objekten in einer digitalen Umgebungskarte sind daher diesbezüglich entsprechende Unwägbarkeiten vorhanden.

Zumindest einige der oben genannten Unwägbarkeiten treten auch bei anderen Detektionseinheiten, wie beispielsweise bei einer Kamera etc. auf.

Es ist Aufgabe der vorliegenden Erfindung, ein Verfahren sowie ein Fahrerassistenzsystem zu schaffen, bei welchem beziehungsweise mit welchem die Anzeige von Objekten in einer Umgebungskarte genauer erfolgt.

Diese Aufgabe wird durch ein Verfahren und ein Fahrerassistenzsystem sowie ein Kraftfahrzeug gemäß den unabhängigen Ansprüchen gelöst.

Bei einem Verfahren zum Erzeugen einer Umgebungskarte eines Umgebungsbereichs eines Kraftfahrzeugs wird dieser Umgebungsbereich mit zumindest einem kraftfahrzeugseitigen Sensor erfasst. Der Sensor kann insbesondere ein Ultraschallsensor sein bzw. es können ein oder mehrere Ultraschallsensoren verwendet werden. Ein wesentlicher Gedanke ist darin zu sehen, dass zu zumindest zwei verschiedenen Zeitpunkten eine Erfassung des Umgebungsbereichs mit dem zumindest einen Sensor durchgeführt wird und abhängig von diesen abhängig von Sensorinformationen zu den Zeitpunkten jeweils detektierten Umgebungsfreiraumsituationen entschieden wird, ob ein in zumindest einer Umgebungsfreiraumsituation zumindest vermeintlich im Umgebungsbereich befindliches Objekt bei einem Aktualisieren der Umgebungskarte auf der dann aktualisierten Umgebungskarte enthalten ist bzw. umfasst wird, insbesondere auch auf der Anzeigeeinheit dann insbesondere auch angezeigten Umgebungskarte angezeigt wird. Durch eine derartige Ausgestaltung können die oben genannten Nachteile bei der Verwendung von Sensoren, insbesondere Ultraschallsensoren, zur Umgebungserfassung eines Kraftfahrzeugs Rechnung getragen werden. Das Auftreten von fälschlichen Detektionen von Objekten oder deren falsche Positionierung, die dann auch fälschlicherweise auf der dynamisch veränderlichen und digitalen Umgebungskarte angezeigt werden, kann damit deutlich reduziert werden. Darüber hinaus kann auch das Anzeigen von falschen oder nicht mehr aktuellen Positionen von detektierten Objekten auf der Umgebungskarte ebenfalls zumindest deutlich reduziert werden. Eine dynamische Aktualisierung der Umgebungskarte kann somit bezüglich der Objektanzahl und der Objektposition wesentlich verbessert werden und in dem Zusammenhang eine diesbezüglich auch quasi sehr präzise Echtzeit-Umgebungskarte auf Basis von Sensorinformationen, insbesondere Ultraschallsensorinformationen, erstellt werden. Vorzugsweise wird vorgesehen, dass eine Existenzwahrscheinlichkeit bzw. Vertraubarkeit eines Objekts im Umgebungsbereich bei einem Objekterfassungsvorgangs des Sensors mit einem von mehreren unterschiedlichen Konfidenzwerten charakterisiert wird. Dies ist eine besonders vorteilhafte Ausführung, da somit quasi auch durch das Verfahren selbst die detektierten Informationen des Sensors, insbesondere Ultraschallsensors, bewertet werden und somit die Aktualisierung der Umgebungskarte nochmals präzisierter wird. Gerade durch eine Mehrzahl von unterschiedlichen Konfidenzwerten wird den unterschiedlichen und vielzähligsten Gegebenheiten bei einem Objekterfassungsvorgang Rechnung getragen und somit auch eine Existenzwahrscheinlichkeitsklassifikation sehr bedarfsgerecht und auch insbesondere sehr feinjustiert beziehungsweise detailliert durchgeführt. Durch eine derartige quasi auch Wahrscheinlichkeitsgewichtung der Existenzwahrscheinlichkeit eines Objekterfassungsvorgangs wird die Entscheidung darüber präzisiert, ob dann ein zumindest in einer Umgebungsfreiraumsituation zumindest vermeintlich im Umgebungsbereich befindliches Objekt bei einem Aktualisieren der Umgebungskarte auf der dann aktualisierten Umgebungskarte angezeigt wird. Damit kann somit auch eine verbesserte Präzision für die Entscheidung dahingehend erreicht werden, ob ein Objekt überhaupt auf der aktualisierten Umgebungskarte angezeigt wird, und wenn ja, kann es dann auch mit einer höheren Präzision bezüglich der genauen Lage des Objekts zum Kraftfahrzeug auf der aktualisierten Umgebungskarte angezeigt werden. Beispielsweise kann dann das falsch positionierte Objekt in der Karte gelöscht werden und/oder mit höherer Präzision in die Umfeldkarte bzw. Umgebungskarte eingetragen werden.

Vorzugsweise können mehr als zwei derartige Konfidenzwerte, insbesondere vier unterschiedliche Konfidenzwerte, definiert und vorgegeben werden.

Insbesondere kann hier als ein Konfidenzwert ein Aktiv-Konfidenzwert vorgegeben werden. Dieser charakterisiert eine höchste Existenzwahrscheinlichkeit eines Objekterfassungsvorgangs bezüglich dem Vorhandensein des Objekts und/oder der Position des Objekts.

Beispielsweise charakterisiert dieser Aktiv-Konfidenzwert die Situation, bei welcher quasi mit höchster Sicherheit beurteilt werden kann, dass ein erfasstes Objekt auch nach der zeitlichen Erfassung der zweiten Umgebungsfreiraumsituation noch im Erfassungsbereich des Sensors, insbesondere Ultraschallsensors, sich befindet und somit auf der aktualisierten Umgebungskarte angezeigt werden soll.

Ein beispielhafter zweiter Konfidenzwert kann beispielsweise ein Verfolgungs-Konfidenzwert sein. Dieser definiert dann insbesondere die Existenzwahrscheinlichkeit, und somit das Vorhandensein und/oder die örtliche Position des Objekts, eines Objekterfassungsvorgangs dahingehend, dass ein Objekt insbesondere im Umgebungsbereich in der zeitlich vorhergehenden ersten Umgebungsfreiraumsituation aktiv gemessen beziehungsweise erfasst wurde und in der zeitlich nachfolgenden zweiten Umgebungsfreiraumsituation dann nicht mehr aktiv erfasst wurde, jedoch darauf rückgeschlossen werden kann, dass sich das Objekt nicht mehr innerhalb des Erfassungsbereichs des Sensors befindet.

Dieser Verfolgungs-Konfidenzwert gibt dann eine Wahrscheinlichkeit an, dass sich das Objekt noch im Erfassungsbereich befindet, die kleiner ist als die diesbezügliche Wahrscheinlichkeit bei dem Aktiv-Konfidenzwert. Dennoch ist hier die Wahrscheinlichkeit des Vorhandenseins des Objekts noch als so hoch zu bewerten, dass zumindest eine Anzeige des Objekts in der aktualisierten Umgebungskarte erfolgt. Die Existenzwahrscheinlichkeit der Position des angezeigten Objekts ist in dem Zusammenhang jedoch reduziert gegenüber dem Aktiv-Konfidenzwert. Bei einem Verfolgungs-Konfidenzwert ist jedoch die Situation so einzuschätzen, dass es, beispielsweise aufgrund der gebotenen Sicherheit, dennoch hilfreich und zweckdienlich ist, das Objekt auf der aktualisierten Umgebungskarte weiterhin anzuzeigen.

Vorzugsweise wird ein dritter Konfidenzwert als Löschungs-Konfidenzwert vorgegeben. Bei diesem Löschungs-Konfidenzwert wird die Wahrscheinlichkeit, dass ein Objekt in dem Erfassungsbereich des Sensors, insbesondere Ultraschallsensors, vorhanden ist, kleiner eingestuft als bei dem Verfolgungs-Konfidenzwert. Bei diesem dritten Löschungs-Konfidenzwert werden insbesondere Situationen berücksichtigt, bei denen der Sensor aufgrund seiner Anordnung und/oder aufgrund der Ausgestaltung des Objekts dieses Objekt bei einer Umgebungsfreiraumsituation nicht mehr detektieren kann, obwohl es noch in seinem Erfassungsbereich sich befindet. Dies kann beispielsweise bei sehr niedrigen Objekten der Fall sein, die sich dann in einem Freiraum zwischen dem Sensor und einem höheren, durch den Sensor detektierten Objekt befinden. Beispielsweise kann dies auch bei statischen und somit ortsfesten Objekten in spezifischen Situationen der Fall sein, beispielsweise wenn die Hauptachse des Sensors deutlich unterschiedlich zu einem Winkel von 90°zu dem Objekt orientiert ist und dadurch das Objekt nicht erfasst wird. Wenn bei diesem Konfidenzwert der Zustand, dass das statische Objekt korrekt detektiert wurde, immer und ohne Ausschluss gültig wäre, könnte hier wiederum eine Eingruppierung anhand des oben genannten Konfidenzwerts, insbesondere auch des Aktiv-Konfidenzwerts, erfolgen. Da jedoch ein derartiges Objekt auch dynamisch oder falsch detektiert sein kann, ist dieser dritte Löschungs-Konfidenzwert für die Entscheidungsprüfung sehr vorteilhaft. Bei diesem dritten Löschungs-Konfidenzwert wird somit eine Situation bewertet, die eine Existenzwahrscheinlichkeit eines Objekts bei einem Objekterfassungsvorgang dahingehend beurteilt, dass die Wahrscheinlichkeit des Nochvorhandenseins des Objekts in dem Erfassungsbereich des Sensors zwar niedriger als beim Verfolgungs-Konfidenzwert ist, jedoch aufgrund der Situation auch eine Wahrscheinlichkeit besteht, dass das Objekt noch in dem Erfassungsbereich sich befindet, jedoch nicht detektiert werden kann. Insbesondere wird dann bei dieser Beurteilung das Objekt noch auf der aktualisierten Karte angezeigt, wobei auch hier dann ähnlich wie beim Verfolgungs-Konfidenzwert die örtliche Lage dieses Objekts gegenüber der tatsächlichen Lage im Umgebungsbereich mit einer Ungenauigkeit beziehungsweise mit einer Abweichung versehen sein kann.

Ein vorteilhafter vierter Konfidenzwert wird durch einen Gelöscht-Konfidenzwert vorgegeben. Durch diesen Gelöscht-Konfidenzwert kann mit einer gegenüber dem Löschungs-Konfidenzwert höheren Wahrscheinlichkeit davon ausgegangen werden, dass sich das Objekt nicht mehr im Erfassungsbereich des Sensors, insbesondere Ultraschallsensors, befindet. Die Genauigkeit eines Objekterfassungsvorgangs wird somit durch diesen vierten Konfidenzwert dahingehend beurteilt, dass mit höchster Wahrscheinlichkeit und somit zumindest mit an Sicherheit grenzender Wahrscheinlichkeit dieses Objekt nicht mehr im Erfassungsbereich des Sensors ist. Das zumindest vermeintlich detektierte Objekt wird dann in diesem Fall auf Basis der Konfidenzwertbeurteilung auf der aktualisierten Karte nicht mehr angezeigt.

Es sei auch erwähnt, dass das erfindungsgemäße Verfahren für unterschiedlichste Anwendungen eingesetzt werden kann. Beispielsweise kann es bei unterschiedlichen Umfelderfassungssystemen, insbesondere Parkassistenzsystemen, welche zum Durchführen eines zumindest semi-autonomen Parkvorgangs ausgebildet sind, eingesetzt werden. Auch kann die Vorgehensweise des erfindungsgemäßen Verfahrens zusätzlich oder anstatt dazu bei einem Bremsassistenzsystem, wie beispielsweise einem ACC (Adaptive Cruise Control)-System Verwendung finden. Insbesondere ist vorgesehen, dass bei diesen unterschiedlichen Verwendungssituationen und somit auch unterschiedlichen Verkehrssituationen das Fahrerassistenzsystem unterschiedlich reagiert und in dem Zusammenhang auch unterschiedliche Reaktionen bezüglich der Objekte und deren Existenzwahrscheinlichkeit bei einem Objekterfassungsvorgang erforderlich sind.

Vorzugsweise wird eine Zuordnung eines spezifischen Konfidenzwerts zu einem Objekterfassungsvorgang abhängig von zumindest einer erfassten Umgebungsfreiraumsituation und/oder zumindest eines vorgegebenen Referenzfreiraums und/oder einem Vergleich zumindest einer Umgebungsfreiraumsituation mit einem Referenzfreiraum und/oder der Art eines Objekts durchgeführt. Als eine Art eines Objekts können beispielsweise die Form des Objekts und somit auch die Ausmaße des Objekts oder der Typ des Objekts definiert werden. Zusätzlich oder anstatt dazu kann auch eine Bewertung über eine Bewegung des Objekts relativ zum Sensor und somit auch zum Kraftfahrzeug berücksichtigt werden, wobei hier somit dann auch statische oder dynamische Objekte umfasst sind. Durch diese vorteilhafte Ausführung wird somit quasi überprüft, insbesondere durch eine Klassifikation oder einen Vergleich, wie sich die tatsächliche Umgebungsfreiraumsituation darstellt und wie sie im Lichte der Konfidenzwertkriterien beurteilt und quasi eingruppiert werden kann. Dies ist dahingehend auch sehr vorteilhaft, dass somit die Aussagepräzision dahingehend erhöht ist, ob eine Anzeige eines Objekts auf einer aktualisierten Umgebungskarte erfolgen kann, und somit auch präziser Aussage darüber erfolgen kann, ob das Objekt überhaupt auf der Umgebungskarte aktualisiert angezeigt werden soll und wenn ja, wie lagegenau es dann in der aktualisierten Umgebungskarte relativ zum Kraftfahrzeug und/oder zu einem anderen gegebenenfalls anzuzeigenden Objekt angezeigt werden kann.

Durch diese Konfidenzwert-Klassifizierungen für die Anzeige-Entscheidungsprüfung können auch die Informationen an einen Fahrzeugnutzer wesentlich verbessert werden und darüber hinaus auch die Reaktion eines auf diesen Informationen des erfindungsgemäßen Verfahrens basierend arbeitenden Fahrerassistenzsystems verbessert werden. Ob und gegebenenfalls wie ein Fahrerassistenzsystem dann reagiert, kann somit sehr individueller und angepasster erfolgen.

Indem die oben genannte Zuordnung eines spezifischen Konfidenzwerts nicht nur anhand eines dieser konkreten Kriterien erfolgt, sondern anhand von vorzugsweise mehreren derartigen Kriterien erfolgt, können die oben genannten Vorteile nochmals verbessert werden.

Ein Freiraum bzw. eine Freiraumsituation stellt allgemein einen zumindest Teilbereich des Erfassungsbereichs zumindest eines Sensors dar, welcher insbesondere zu einem spezifischen Zeitpunkt dahingehend beurteilt ist, wie frei er von Objekten ist. Dies trifft auf die tatsächliche Verkehrssituation zu, die durch eine Umgebungsfreiraumsituation charakterisiert ist, als auch für einen Referenzfreiraum, der durch eine vordefinierte Verkehrssituation charakterisiert ist.

Bei der erfindungsgemäßen Ausführung ist vorgesehen, dass eine Mehrzahl von unterschiedlichen Referenzfreiräumen vorgegeben wird, welche somit zunächst dann allgemein definiert und insbesondere in einem Fahrerassistenzsystem abgelegt und abgespeichert werden. Es wird insbesondere zumindest abhängig von einem Vergleich der Umgebungsfreiraumsituation mit zumindest einem Referenzfreiraum und einem eine Genauigkeit dieses Objekterfassungsvorgangs des Sensors charakterisierenden Konfidenzwert, wie er oben in vorteilhaften Ausführungen genannt ist, das Enthaltensein oder Nicht-Enthaltensein, insbesondere das dann auch Anzeigen oder Nicht-Anzeigen, des Objekts in der aktualisierten Umgebungskarte durchgeführt. Dies ist eine besonders hervorzuhebende Ausführungsform, denn durch eine derartige Vorgabe und Klassifizierung bzw. Kategorisierung von spezifischen modellierten Freiraumsituationen, die durch die Referenzfreiräume abgebildet werden, kann die Aussage über die tatsächliche Situation, die durch die Umgebungsfreiraumsituationen dargestellt wird, nochmals verbessert eingeschätzt und beurteilt werden. Indem durch diese Mehrzahl von Referenzfreiräumen spezifischen und gegebenenfalls auch bezüglich einer Wahrscheinlichkeitshäufigkeit in der tatsächlichen Verkehrswelt priorisierten Situationen Rechnung getragen wird, kann auch hier bereits die Aussagegenauigkeit durch den Vergleich zumindest eines Referenzfreiraums mit den Umgebungsfreiraumsituationen die Entscheidungsfindung über das Darstellen eines Objekts auf einer aktualisierten Umgebungskarte verbessert werden. Diese Referenzräume sind daher ganz besonders wesentliche Vorgaben für die Entscheidungsfindung und erhöhen die Präzision über die Entscheidung dahingehend wesentlich, ob ein Objekt auf der aktualisierten Umgebungskarte angezeigt werden soll und wenn ja, ob in dem Zusammenhang dann, insbesondere auch unter Berücksichtigung der Konfidenzwerte, auch eine besonders exakte und aktualisierte Position des Objekts auf der Umgebungskarte angezeigt werden kann. Die Echtzeitausgestaltung einer aktualisierten Umgebungskarte auf Basis von Sensoren, insbesondere Ultraschallsensoren, kann dadurch wesentlich verbessert werden.

Aufgrund der äußerst großen Komplexität und Vielfalt von auftretenden Umgebungssituationen, wie sie in einem Umgebungsbereich eines Kraftfahrzeugs in der tatsächlichen Realität auftreten können, kann durch diese Modellierung mit Referenzfreiräumen eine sehr hervorzuhebende Strukturierung dieser Vielfalt vorgegeben und eine besonders analytische und detailangepasste Auswahl und Eingruppierung der tatsächlich erfassten Situation ermöglicht werden. Durch diese Ausgestaltung kann damit auch sehr zielgerichtet und somit auch schnell eine sehr hohe verlässliche Aussage über die zu bewertende Anzahl der Umgebungsfreiraumsituationen und die dadurch erhaltenen Informationen erfolgen.

Es wird in dem Zusammenhang auch die Möglichkeit geschaffen, dass die Umgebungsfreiraumsituationen mit zumindest zwei Referenzräumen verglichen werden, was die oben genannten Vorteile nochmals begünstigt. Insbesondere kann somit vorgesehen sein, dass die Auswahl, ob die Umgebungsfreiraumsituationen mit nur einem Referenzfreiraum oder zumindest zwei Referenzfreiräumen verglichen wird, auf Basis von Informationen zumindest der ersten Umgebungsfreiraumsituation und/oder zumindest der zweiten Umgebungsfreiraumsituation erfolgen. Es kann in dem Zusammenhang auch vorgesehen sein, dass auf Basis der Reihenfolge der Umgebungsfreiraumsituationen und den daraus erhaltenen Informationen, die sich somit insbesondere in zeitlicher Abfolge spezifizieren lassen, die Anzahl und/oder welche Referenzfreiraummodelle, die zum Vergleich herangezogen werden, ausgewählt wird.

Es kann jedoch auch vorgesehen sein, dass bei einer pauschalen Vorgabe eine gewisse Prioritätsreihenfolge der Referenzfreiräume vorgegeben wird, die dann in dieser Reihenfolge zum Vergleich mit den Umgebungsfreiraumsituationen ausgewählt werden. Ebenso kann vorgesehen sein, dass beispielsweise abhängig davon, welches Referenzfreiraummodell zum Vergleich mit den Umgebungsfreiraumsituationen ausgewählt wurde, ein zweites Referenzfreiraummodell ausgewählt wird. Gegebenenfalls kann in dem Zusammenhang beispielsweise anhand des Referenzfreiraums, mit welchem ein erster Vergleich mit den Umgebungsfreiraumsituationen durchgeführt wird, bereits eine doch schon sehr spezifische und zielführende weitere Vergleichsbildung mit einem dann weiteren spezifischen Referenzfreiraummodell erfolgen, durch welches aufbauend auf den Vergleich mit dem ersten Referenzfreiraummodell auch eine gewisse Abhängigkeit dahingehend gegeben ist, dass die Aussagepräzision über das Anzeigen eines Objekts auf einer aktualisierten Umgebungskarte schneller, zielführender und präziser ermöglicht ist.

Ist vorteilhafterweise eine Verknüpfung beziehungsweise ein Zusammenhang eines Konfidenzwerts des Konfidenzwertmodells mit einem Referenzfreiraummodell im Hinblick auf die Entscheidung über eine Anzeige eines Objekts auf der aktualisierten Karte vorgegeben, wird dann durch diese Berücksichtigung zumindest eines Referenzfreiraums und eines Konfidenzwerts die Entscheidung, ob ein Objekt auf einer aktualisierten Karte angezeigt werden soll, nochmals detaillierter und genauer.

Es kann auch vorgesehen werden, dass abhängig von der Anzahl von in den Umgebungsfreiraumsituationen detektierten Objekten und/oder von der Art von in den Umgebungsfreiraumsituationen detektierten Objekten und/oder der örtlichen Lage eines in zumindest einer Umgebungsfreiraumsituation detektierten Objekts zum Kraftfahrzeug und/oder einer örtlichen Lageveränderung eines in den Umgebungsfreiraumsituationen detektierten Objekts zum Kraftfahrzeug ein spezifischer Referenzfreiraum aus der Mehrzahl der Referenzfreiräume für den Vergleich ausgewählt wird. Auch durch diese vorteilhafte Ausführung kann eine schnellere Aussage darüber, ob ein Objekt auf einer aktualisierten Umgebungskarte angezeigt werden soll, ermöglicht werden. Da sich hier auch aus der bereits oben genannten sehr hohen Vielfalt von Alltagssituationen im Verkehr verschiedenste komplexe Zusammenhänge ergeben können, kann durch diese Merkmalspezifikation die Entscheidungsfindung bezüglich der Gestaltung der aktualisierten Umgebungskarte differenziert und verbessert werden.

Bei einer weiteren vorteilhaften Ausführung wird abhängig von der Anzahl von in den Umgebungsfreiraumsituationen detektierten Objekten und/oder von der Art von in den Umgebungsfreiraumsituationen detektierten Objekten und/oder der örtlichen Lage eines in zumindest einer Umgebungsfreiraumsituation detektierten Objekts zum Kraftfahrzeug und/oder einer örtlichen Lageveränderung eines in den Umgebungsfreiraumsituationen detektierten Objekts zum Kraftfahrzeug die Anzahl der für den Vergleich zu berücksichtigenden Referenzfreiräume bestimmt. Auch dadurch lassen sich dann die bereits oben genannten Vorteile erreichen beziehungsweise verbessern.

Vorzugsweise wird ein erster Referenzfreiraum als Objektfreiraum definiert, bei welchem für die Bewertung eines Objekts ein Abstand des Objekts zum Sensor, insbesondere Ultraschallsensor, und die Orientierung des Objekts zum Sensor berücksichtigt werden. Diese beiden Parameter betreffend den Abstand und die Orientierung und erlauben eine sehr genaue Aussagemöglichkeit über das tatsächliche Vorhandensein eines Objekts in einem Erfassungsbereich des Sensors. Lassen sich somit diese Parameterwerte in zumindest einer Umgebungsfreiraumsituation detektieren, so kann dann auch sehr exakt, insbesondere unter Berücksichtigung eines spezifischen Konfidenzwerts, insbesondere unter Berücksichtigung des Aktiv-Konfidenzwerts, mit höchster Wahrscheinlichkeit die Aussage getroffen werden, dass das erfasste Objekt in der jeweiligen Umgebungsfreiraumsituation tatsächlich vorhanden ist und tatsächlich auch an der entsprechenden Position vorhanden ist. Trifft dies dann auf beide Umgebungsfreiraumsituationen zu, so ist quasi mit höchster Sicherheit die Situation gegeben, dass das Objekt tatsächlich noch vorhanden ist und an der entsprechenden Position vorhanden ist, sodass es dann auch exakt in der aktualisierten Umgebungskarte angezeigt.

Tritt hingegen dann eine Situation auf, bei welcher der Abstand und die Orientierung eines Objekts nur in einer Umgebungsfreiraumsituation genau bestimmt werden kann, so kann dann abhängig davon, ob dieses in der ersten Umgebungsfreiraumsituation oder der zweiten Umgebungsfreiraumsituation erfolgt ist, wiederum mit einem dann spezifischen Konfidenzwert auf die Wahrscheinlichkeit des Vorhandenseins rückgeschlossen werden. Durch dieses ganz spezifische, auf charakteristischen Parametern eines Objekts basierende Freiraummodell können die genannten entsprechenden Aussagen getroffen werden.

In einer bevorzugten Ausführung wird zum Vergleichen der Umgebungsfreiraumsituationen mit diesem ersten Referenzfreiraum in der ersten Umgebungsfreiraumsituation ein erfasster Abstandswert bei einer spezifischen Orientierung des Objekts, bei welchem das Objekt erstmals detektiert wurde, als Referenzabstandswert, gespeichert. Zumindest bei einer in der zweiten Umgebungsfreiraumsituation auftretenden relativen Lageveränderung zwischen dem Sensor und dem Objekt wird überprüft, ob das Objekt in der zweiten Umgebungsfreiraumsituation erfasst wurde. Bei einem nicht mehr Erfassen des Objekts in dieser zweiten Umgebungsfreiraumsituation durch den Sensor wird insbesondere das Objekt auf der aktualisierten Umgebungskarte aufgrund der Kriterien des ersten Referenzfreiraums, insbesondere eines spezifischen, insbesondere zugeordneten, Konfidenzwerts, nicht mehr angezeigt. Es wird dann bei dieser spezifischen Ausführungsform mit entsprechender Wahrscheinlichkeit davon ausgegangen, dass sich aufgrund einer relativen Lageveränderung zwischen dem Kraftfahrzeug und somit auch dem Sensor und dem Objekt zeitlich folgend auf die erste Umgebungsfreiraumsituation das Objekt wohl nicht mehr in dem Erfassungsbereich des Sensors befindet und daher die Relevanz zur Anzeige auf der aktualisierten Umgebungskarte zumindest so gering ist, dass das Anzeigen nicht mehr erforderlich erscheint.

Bei einer weiteren vorteilhaften Ausführung wird ein zweiter Referenzfreiraum als Sensorfreiraum definiert, bei welchem für die Bewertung eines Objekts berücksichtigt wird, ob es in einer Umgebungsfreiraumsituation zwar im ersten Erfassungsbereich des Sensors sich befindet, jedoch nicht vom Sensor als Objekt erfasst werden kann. Vorzugsweise wird bei diesem Sensorfreiraum im Unterschied zum Objektfreiraum die Sicht vom Sensor her betrachtet. Insbesondere dann, wenn bei diesem Sensorfreiraummodell auch die Bedingungen des Objektfreiraums nicht erfüllt sind und beispielsweise auch für ein niedriges Objekt der Abstand abhängig von der Bewegungsrichtung zwischen dem Kraftfahrzeug und dem detektierten Objekt sich in diese Bewegungsrichtung dahingehend verändert, dass es von einem Referenzabstandswert, zu den das Objekt erstmals detektiert wurde, verändert und somit dann das Objekt nicht mehr detektiert werden kann, obwohl es sich in dem Erfassungsbereich des Sensors befindet, ist dieser Sensorfreiraum für die Charakterisierung der Umgebungsfreiraumsituation besonders bedeutend. Es können in dem Zusammenhang zwei mögliche Situationen zugrundeliegen. Beispielsweise kann hier vorgesehen sein, dass das Objekt als statisches Objekt korrekt detektiert wurde. In diesem Fall ist das Objekt als durchaus noch vorhanden zu beurteilen. Es kann jedoch nicht erfasst werden, da es aufgrund der Objekteigenschaften und der relativen Lageveränderung in dieser zweiten Umgebungsfreiraumsituation vom Sensor nicht mehr erfasst werden kann. Beispielsweise kann aufgrund der Geometrie oder der Abmessungen dann, wenn sich das Fahrzeug von dem Objekt wegbewegt und bereits ein Abstand eingetreten ist, der größer als der Referenzabstandswert ist, die Detektion nicht mehr möglich sein. Dies kann beispielsweise bei sehr dünnen oder kleinen Objekten der Fall sein, die dann mit zunehmendem Abstand ab dem Referenzabstandswert nicht mehr vom Sensor erfasst werden können.

Eine zweite Situation lässt sich dahingehend charakterisieren, dass das Objekt ein dynamisches Objekt ist, welches sich somit selbst gegenüber dem Kraftfahrzeug bewegt, oder ein falsch detektiertes Objekt ist. In diesen beiden Unterfällen kann dann davon ausgegangen werden, dass das Objekt nicht mehr im Erfassungsbereich des Sensors vorhanden ist. Insbesondere unter Berücksichtigung dieser spezifischen Situation und eines dann insbesondere spezifisch zugeordneten Konfidenzwerts kann dann die Situation dahingehend beurteilt werden, dass mit höchster Wahrscheinlichkeit das Objekt nicht mehr im Erfassungsbereich des Sensors, insbesondere Ultraschallsensors, ist und somit nicht mehr auf der aktualisierten Umgebungskarte angezeigt werden soll.

Da es insbesondere jedoch nicht möglich ist, insbesondere nicht mit gewünschter Aussagepräzision möglich ist, auf Basis der Informationen des Sensors zwischen einem dynamischen und einem statischen Objekt zu unterscheiden, ist in einer bevorzugten Ausführung vorgesehen, eine derartige Situation dann so zu beurteilen, dass zwar mit hoher Wahrscheinlichkeit das Objekt nicht mehr in dem Erfassungsbereich vermutet wird, dennoch die Wahrscheinlichkeit, dass es noch in dem Erfassungsbereich sein könnte, so beurteilt wird, dass dies bezüglich, insbesondere im Hinblick auf die Sicherheitsanforderungen, eine Anzeige des Objekts in der aktualisierten Umgebungskarte erfolgen sollte. Bei diesen Ausgestaltungen ist dann gemäß den bereits oben genannten vorteilhaften Definitionen von verschiedenen Konfidenzwerten jedoch dann die exakte Lage des Objekts in der Umgebungskarte, insbesondere relativ zum Kraftfahrzeug, mit einer gewissen Ungenauigkeit versehen.

Wenn eine Messung des Sensors erhältlich ist, ist in bevorzugter Weise der Sensorfreiraum auf die Messdistanz begrenzt, da keine Beurteilungen am Objekt erfolgen können, die außerhalb dieser maximalen Messdistanz liegen, insbesondere aufgrund der Tatsache, dass mit einem Sensor kein Hindurchschauen durch Objekte erfolgen kann und somit nicht beurteilt werden kann, was sich hinter diesen detektierten, insbesondere hohen, Objekten befindet.

Vorzugsweise wird beim Vergleichen der Umgebungsfreiraumsituationen mit dem zweiten Referenzfreiraum ein Objekt auf der aktualisierten Karte, insbesondere aufgrund eines spezifischen Konfidenzwerts, angezeigt, wenn ein Objekt in der Umgebungsfreiraumsituation von dem Sensor erfasst wurde, in der zweiten Umgebungsfreiraumsituation aber das Objekt nicht mehr von dem Sensor erfasst wurde, aber zumindest mit einer Wahrscheinlichkeit größer einem Schwellwert angenommen werden kann, dass sich das Objekt weiterhin im Erfassungsbereich des Sensors befindet.

Bei einer weiteren vorteilhaften Ausführung wird ein dritter Referenzfreiraum als Aktivfreiraum definiert, bei welchem der Raum zwischen dem Sensor und einem durch den Sensor erfassten Objekt als frei von zumindest erfassten Objekten vergleichbar hohen Objekten, insbesondere frei von Objekten größer einem Höhenschwellwert, betrachtet wird. Auch dies ist eine besonders vorteilhafte Definition eines Referenzfreiraums, bei welchem ein spezifischer Teilbereich von einem Erfassungsbereich eines Sensors betrachtet wird. Da es gerade vielerlei Situationen geben kann, bei denen zwischen einem erfassten Objekt und einem Sensor im Erfassungsbereich des Sensors auch im Vergleich zum erfassten Objekt niedrige Objekte vorhanden sind, die dann von dem Sensor nicht mehr explizit detektiert werden können, jedoch insbesondere im Erfassungsbereich vorhanden sind, erhöht diese Ausgestaltung die Aussagepräzision bezüglich der aktualisierten Umgebungskarte betreffend eine Objektdarstellung wesentlich. Es kann somit auch durch das erfindungsgemäße Verfahren beziehungsweise eine vorteilhafte Ausgestaltung davon in einem spezifischen Teilbereich des Erfassungsbereichs, wie er dann durch den Aktivfreiraum definiert wird, eine genauere Aussage über vermeintlich darin befindliche Objekte getroffen werden und insbesondere diesbezüglich singulär oder in einer vorteilhaften Ausführung abhängig von anderen Referenzfreiräumen und den Umgebungsfreiraumsituationen eine Aussage über ein vermeintliches Objekt in diesem Aktivfreiraum getroffen werden.

In einer vorteilhaften Ausführung wird beim Vergleichen der Umgebungsfreiraumsituationen mit dem dritten Referenzfreiraum, nämlich dem Aktivfreiraum, ein in zumindest einer Umgebungsfreiraumsituation vermeintlich zwischen dem Sensor und dem erfassten Objekt erfasstes, insbesondere zum erfassten Objekt vergleichbar hohes, Objekt auf der aktualisierten Karten, insbesondere aufgrund eines spezifischen Konfidenzwerts, nicht angezeigt. Es kann dann mit entsprechender, insbesondere vorgegebener, Wahrscheinlichkeit davon ausgegangen werden, dass in diesem Aktivfreiraum kein weiteres, insbesondere zu beachtendes und wesentliches Objekt vorhanden ist. Somit ist bei einer bevorzugten Ausführung mit dem Aktivfreiraum auch eine Situation umfasst, bei welcher der Sensor mit höchster Existenzwahrscheinlichkeit, insbesondere mit einer Existenzwahrscheinlichkeit betreffend den Aktiv-Konfidenzwert, detektiert, und eine Position der Messung ist mit entsprechender Vertraubarkeit und Wahrscheinlichkeit deklarierbar. So kann mit einer weiteren entsprechend hohen Wahrscheinlichkeit auch davon ausgegangen werden, dass kein weiteres Objekt, welches höher einem Höhenschwellwert ist, in dem Aktivfreiraum zwischen dem Sensor und dem aktiv detektierten Objekt, welches auf der dem Sensor abgewandten Seite somit den Aktivfreiraum quasi begrenzt, mehr vorhanden ist, wenn es insbesondere höher dem Höhenschwellwert ist. Bevorzugt kann vorgesehen sein, dass Objekte, die niedriger dem Höhenschwellwert sind, auch wiederum aufgrund eines insbesondere dann spezifischen Konfidenzwerts als anzeigewürdig in der aktuellen Umgebungskarte eingestuft werden und entsprechend dann auch auf der aktuellen Umgebungskarte angezeigt werden. Abhängig davon, ob diese dazwischenliegende Objekte dann mit entsprechender Existenzwahrscheinlichkeit, insbesondere abhängig vom Abstand und der Orientierung, erfasst werden können, kann unter Berücksichtigung des Objektfreiraums und/oder insbesondere des Aktiv-Konfidenzwerts auch die örtliche Lage dieser Objekte dann sehr genau bestimmt und in der aktualisierten Umgebungskarte nicht nur die Anzeige als solche, sondern auch die Lage sehr präzise dargestellt werden.

Bei einer weiteren vorteilhaften Ausführung wird ein vierter Referenzfreiraum als Hintergrundfreiraum definiert, bei welchem Objekte in einem Raum des Erfassungsbereichs des Sensors betrachtet werden, der sich auf der dem Sensor abgewandten Seite im Anschluss an den Aktivfreiraum und/oder Sensorfreiraum erstreckt. Auch dadurch ist somit ein weiterer Teilbereich des Erfassungsbereichs lokal spezifiziert und wird individuell im Hinblick auf Detektion von Objekten exakt beurteilt und eingestuft.

Vorzugsweise wird beim Vergleichen der Umgebungsfreiraumsituationen mit dem vierten Referenzfreiraum abhängig von einem wiederum spezifischen Konfidenzwert eines in dem Hintergrundfreiraum zumindest in einer Umgebungsfreiraumsituation erfassten Objekts entschieden, ob das Objekt auf der aktualisierten Umgebungskarte angezeigt wird. Insbesondere ist somit bei diesem Freiraum erforderlich, dass zunächst ein Aktivfreiraum und/oder ein Sensorfreiraum zugrundegelegt und Umgebungsfreiraumsituationen entsprechend durch den Vergleich charakterisiert werden können, um dann auch diesen Hintergrundfreiraum analysieren zu können. Erst dann können quasi bei dieser Ausführung die Lage und das Ausmaß des Hintergrundfreiraums bestimmt werden.

Es kann dann insbesondere auch eine Beurteilung dahingehend erfolgen, dass der Zustand eines Objekts in diesem Hintergrundfreiraum als unbekannt eingestuft wird. Daher können auch hier unterschiedliche Untergruppierungen für Objekte, die in dem Hintergrundfreiraum vorhanden sind, gegeben werden. In dem Zusammenhang kann für Objekte, die bezüglich ihres Konfidenzwerts verfolgt werden können und somit insbesondere in beiden Umgebungsfreiraumsituationen vermeintlich erfasst werden, dahingehend beurteilt werden, dass ihre Konfidenz gleichbleibend bewertet wird und bei den weiteren Messzyklen und somit bei weiteren Objekterfassungsvorgängen, die dann zu Umgebungsfreiraumsituationen führen, nicht geändert werden sollte. Bei Objekten, deren Konfidenzwert als Aktiv-Konfidenzwert oder als Löschungs-Konfidenzwert angesehen werden kann, sollte insbesondere auch die Konfidenz unverändert bleiben.

Vorzugsweise wird bei einem Vergleichsablauf beziehungsweise einem Vergleichsszenario vorgesehen, dass beim Vergleichen, bei welchem zumindest zwei verschiedene Referenzräume berücksichtigt werden, und aufgrund eines Vergleichs mit einem Referenzfreiraum das Objekt auf der aktualisierten Umgebungskarte angezeigt werden soll und aufgrund eines Vergleichs mit einem anderen Referenzfreiraum das Objekt auf der aktualisierten Umgebungskarte nicht angezeigt werden soll, eine weitere Entscheidungsprüfung durchgeführt wird. Auch dadurch kann dann die Aussagegenauigkeit und die Anzeigegenauigkeit verbessert werden.

Vorzugsweise wird die Entscheidungsprüfung dahingehend durchgeführt, dass eine Anzeige auf der aktualisierten Umgebungskarte zu erfolgen hat, wenn zumindest bei einem Vergleich mit einem Referenzfreiraum eine Anzeige erfolgen soll. Damit wird relativ vereinfacht und pauschal davon ausgegangen, dass dann, wenn zumindest einmal das Objekt als anzuzeigen eingestuft wurde, dies auch insbesondere aus Sicherheitsgründen erfolgen soll. Es kann in dem Zusammenhang dann vorgesehen sein, dass dann, wenn zumindest eine dritte Umgebungsfreiraumsituation berücksichtigt wird und somit bei einer ungeradzahligen Berücksichtigung von Umgebungsfreiraumsituationen eine Entscheidung zu treffen ist, die Anzeige beispielsweise auf Basis der dann höheren Anzahl erfolgt, die angibt, ob das Objekt angezeigt werden soll oder nicht. Dies bedeutet, dass beispielsweise dann, wenn bei zwei Vergleichen das Ergebnis ist, dass eine Anzeige auf der aktualisierten Umgebungskarte erfolgen sollte, und bei einem Vergleich eine derartige Anzeige als nicht erforderlich eingestuft wird, dennoch die Anzeige dann erfolgt.

Es kann auch vorgesehen sein, dass die Entscheidungsprüfung dahingehend erfolgt, dass eine Gewichtung der Referenzräume vorgegeben wird und abhängig von der Gewichtung dann entschieden wird, ob eine Anzeige auf der aktualisierten Umgebungskarte erfolgt, wenn bei einer geradzahligen Anzahl von Vergleichen jeweils eine Anzahl die Anzeige des Objekts für erforderlich hält und eine entsprechende gleiche Anzahl diese Anzeige nicht für erforderlich hält. Durch die Gewichtung der Referenzräume kann auch deren Wichtigkeit unterschiedlich beurteilt werden, was auch wiederum anhand von tatsächlichen Verkehrssituationen eine präzisere Entscheidungsfindung über die tatsächliche Anzeige auf einer aktualisierten Umgebungskarte von Objekten begünstigt.

Es kann auch vorgesehen sein, dass aufgrund der durch die zeitliche Reihenfolge der beiden Umgebungsfreiraumsituationen erhaltenen Änderungen der Umgebungsfreiraumsituationen entschieden wird, ob ein Anzeigen auf der aktualisierten Umgebungskarte erfolgen soll oder nicht. Auch durch diese Alternative kann bei einer Gleichverteilung der Ergebnisse, ob bei den Vergleichen zwischen den Referenzräumen und der Umgebungsfreiraumsituation ein Objekt als anzuzeigen eingestuft wird oder nicht, aufgrund dieser zusätzlichen Kriterienbildung die Entscheidung in eine Richtung gelenkt werden. Aufgrund dieser zeitlichen Reihenfolge der erhaltenen Informationen können ebenfalls unterstützend gewisse Rückschlüsse gewonnen werden, ob sich die Verkehrssituation mit den Objekten höchstwahrscheinlich in eine Richtung dahingehend gestaltet, dass das Objekt für die Anzeige weniger relevant werden wird oder ob dieses relevanter werden wird.

In einer weiteren vorteilhaften Ausführung ist vorgesehen, dass die Mehrzahl der Referenzräume im Hinblick auf die Entscheidungsfindung einer Objektanzeige auf einer aktualisierten Umgebungskarte voneinander abhängig vorgegeben wird. Eine derartige Abhängigkeit kann beispielsweise durch zumindest eine Umgebungsfreiraumsituation und/oder zumindest die Art eines Objekts in einer Umgebungsfreiraumsituation und/oder abhängig von einer Lage zumindest eines Objekts zum Sensor, insbesondere Ultraschallsensor, ausgebildet werden. Die Referenzfreiräume sind somit bei einer derartigen vorteilhaften Ausführung im Hinblick auf die Entscheidungsfindung auch definiert miteinander verknüpft. Dies kann zusätzlich oder anstatt dazu auch mit den Konfidenzwerten erfolgen, wobei insbesondere auch hier dann vorgegeben werden kann, dass eine Verknüpfung der Referenzräume abhängig von zumindest einem Konfidenzwert oder mehreren Konfidenzwerten erfolgt.

In einer bevorzugten Ausführung wird auch mit einer insbesondere gewissen Wahrscheinlichkeitsdefinition und somit unter einer Konfidenzwertaussage eine Klassifizierung eines Objekts als statisches oder dynamisches Objekt vorgegeben. Obwohl mit Sensoren, insbesondere Ultraschallsensoren, eine derartige Klassifikation als statisch oder ortsfest grundsätzlich insbesondere genau nicht möglich ist, kann durch eine derartige Modellbildung mit einer gewissen Wahrscheinlichkeit auf ein statisches oder dynamisches Modell rückgeschlossen werden.

Dieses Modell kann sich beispielsweise dahingehend definieren, dass aufgrund von kraftfahrzeugseitigen Informationen, insbesondere von Parametern, wie die Geschwindigkeit des Kraftfahrzeugs, auf ein statisches oder dynamisches Objekt geschlossen werden kann. Ist beispielsweise bekannt, dass sich das Fahrzeug nicht bewegt, und kann in den Umgebungsfreiraumsituationen eine Lageveränderung eines Objekts zum Kraftfahrzeug explizit und aktiv, beispielsweise unter Berücksichtigung und Beurteilung des Aktiv-Konfidenzwerts, festgestellt werden, so kann auf ein dynamisches Objekt geschlossen werden. Ebenso kann dies dann erfolgen, wenn das Kraftfahrzeug in beiden Umgebungsfreiraumsituationen stillsteht und somit seine örtliche Lage nicht verändert hat, das Objekt jedoch in einer Umgebungsfreiraumsituation vorhanden ist und in der anderen nicht. Kann auch hier wiederum aufgrund des Aktiv-Konfidenzwerts darauf geschlossen werden, dass das Objekt in beiden Umgebungsfreiraumsituationen mit höchster Wahrscheinlichkeit und somit eindeutig identifiziert und erfasst wurde, so kann auch hier von einem dynamischen Objekt ausgegangen werden. Kann das Objekt andererseits in einer Umgebungsfreiraumsituation nicht eindeutig, insbesondere anhand des Abstands und der Orientierung zum Kraftfahrzeug, welches in beiden Umgebungsfreiraumsituationen stillsteht, erfasst werden, so ist hier wiederum mit einer größeren Unsicherheit und somit mit geringerer Wahrscheinlichkeit von einem dynamischen Objekt auszugehen. Denn es kann dann in der Umgebungsfreiraumsituation, in welcher das Objekt nicht erfasst werden konnte, wiederum eine Situation, die dem Aktivfreiraum oder dem Sensorfreiraum zugeordnet werden kann, nicht genau entschieden werden, ob sich das Objekt bewegt hat oder ob aufgrund einer Fehlmessung durch den Sensor die Detektion nicht erfolgen konnte. In diesen Situationen kann dann nicht entschieden werden, ob das Objekt statisch ist oder ob es sich somit dynamisch bewegt hat und aufgrund der Lageveränderung zum stillstehenden Kraftfahrzeug, beispielsweise aufgrund des Abstands und/oder der Orientierung, eine Erfassung des Objekts, welches sich dann auch noch im Erfassungsbereich des Sensors befinden kann, verhindert ist.

Beispielsweise können derartige Fehlmessungen auch dahingehend entstehen, dass aufgrund von sehr geringen Änderungen der Sensormessung, beispielsweise aufgrund von Messtoleranzen, nicht exakt davon ausgegangen werden kann, dass bei zwei Messungen und somit der Erzeugung von zwei Umgebungsfreiraumsituationen exakt der gleiche Reflexionspunkt an dem Objekt, das detektiert wird, auftritt, sodass sich auch hier aufgrund von Messtoleranzen Messfehler ergeben können. Auch kann ein Objekt mit einem anderen unterschiedlichen Objekt im Zuge des zeitlichen Fortschritts und bei den dann auftretenden unterschiedlichen Umgebungsfreiraumsituationen quasi zusammengefügt werden und sich zumindest bereichsweise überlappen, sodass auch hier Unwägbarkeiten in der Aussagewahrscheinlichkeit über ein statisches oder dynamisches Modell auftreten können. Auch kann bei einem dynamischen Objekt, welches sich mit einer Geschwindigkeitskomponente parallel zu einer Sensorachse ungleich zu 0 bewegt, die Situation auftreten, dass die relative Geschwindigkeit des Objekts bestimmt werden kann und das Objekt dann als dynamisch klassifiziert werden kann.

Unter Berücksichtigung dieser vorteilhaften Ausführung, bei welcher mit zumindest auch wiederum spezifischen Wahrscheinlichkeitswerten und somit auch Konfidenzwerten auf ein statisches oder dynamisches Modell mehr oder minder genau geschlossen werden kann, in den Fällen, in denen eine Dynamik des Objekts individueller Konfidenzwertzuordnung vermutet werden kann, vorgesehen, das Objekt nicht mehr auf der aktualisierten Umgebungskarte anzuzeigen, wenn es in der zweiten Umgebungsfreiraumsituation nicht mehr erfasst wurde.

In einer vorteilhaften Ausführung kann vorgesehen sein, dass die Umgebungskarte als vektorielle Karte oder aber auch als Zellenkarte, bei welcher individuelle, insbesondere Teilbereiche, des gesamten anzuzeigenden Umgebungsbereichs in einzelne, aneinandergereihte, insbesondere matrixförmig aneinandergereihte, Zellen erzeugt werden beziehungsweise aufgebaut wird.

Besonders bevorzugt ist die Erfindung für Ultraschallsensoren, so dass die kraftfahrzeugseitige zumindest eine Detektionseinheit bzw. der Sensor ein Ultraschallsensor ist. Die eingangs genannten Unwägbarkeiten von Ultraschallsensoren können durch die Erfindung wesentlich kompensiert werden.

Alternativ kann der Sensor auch ein Radarsensor, eine Kamera, ein Lidar-Sensor oder ein Laserscanner sein. Der Umgebungsbereich kann demnach auch mit zumindest einem kraftfahrzeugseitigen Radarsensor, zumindest einer kraftfahrzeugseitigen Kamera und/oder einem kraftfahrzeugseitigen Laserscanner erfasst werden. Insbesondere kann eine Kombination aus Ultraschallsensor, Radarsensor, Kamera und/oder Laserscanner verwendet werden. Der Sensor kann jeder geeignete kraftfahrzeugseitige Umfelderfassungssensor oder es kann eine Kombination mehrerer Umfelderfassungssensoren verwendet werden.

Mit dem erfindungsgemäßen Verfahren oder einer vorteilhaften Ausgestaltung davon wird durch individuelle Freiraumdefinitionen und/oder Konfidenzwertdefinitionen eine Art Klassifikation von tatsächlich vorkommenden Verkehrssituationen im Hinblick auf Objektdetektion mit einem Sensor Rechnung getragen. Diese äußerst hohe Komplexität der tatsächlichen möglichen auftretenden Verkehrssituationen wird durch eine auf diesen Konfidenzwerten und/oder Referenzfreiräumen basierende Entscheidungsprüfung über eine Anzeige eines Objekts auf einer aktualisierten Umgebungskarte strukturell erfasst. Dieser äußerst komplexen Thematik wird durch die Erfindung daher sehr zielgerichtet und im Hinblick auf eine präzise Entscheidungsfindung über eine genaue Objektanzeige auf der aktualisierten Umgebungskarte Rechnung getragen, wobei hier auch zusätzlich auf eine hohe Geschwindigkeit der Entscheidungsprüfung ein Auge geworfen ist. Die eingangs genannten, vielzähligen Unwägbarkeiten von Sensormessungen werden hier in ihrer Anzahl und auch Komplexität dahingehend erfasst und berücksichtigt, dass ein bestmögliches Entscheidungsmodell für eine hochpräzise und hochaktuelle Anzeige von Objekten auf einer Umgebungskarte erfolgen kann, sodass eine tatsächliche Echtzeitaktualisierung einer Umgebungskarte nicht nur im Hinblick auf die Geschwindigkeit einem Echtzeiterfordernis quasi entspricht, sondern auch im Hinblick auf die Aussageexaktheit über wesentliche Objekte und/oder deren Lage zum Sensor beziehungsweise zum Kraftfahrzeug genügt.

Durch die Erfindung wird somit der Tatsache Rechnung getragen, dass eine wesentliche Verbesserung dahingehend auftritt, dass bei herkömmlichen Ausgestaltungen von Umgebungskarten fälschlich detektierte Objekte nicht mehr oder eine fälschliche Anzeige mit deutlich geringerer Wahrscheinlichkeit als im Stand der Technik erfolgt. Gleiches gilt andererseits für Objekte, die bei bisherigen Vorgehensweisen nicht angezeigt wurden, jedoch angezeigt werden sollten. Gleiches gilt auch dann für die Lage von anzuzeigenden Objekten. Durch die Erfindung werden auch übliche bekannte Phänomene, bei denen Objekte in einer Umgebungskarte in ihrer Kontur nicht scharf sondern ähnlich einem Kometenschweif angezeigt werden, vermieden.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine schematische Draufsicht auf ein erstes Ausführungsbeispiel der Verkehrssituation mit unterschiedlichen Umgebungsfreiraumsituationen;
- Fig. 2: eine Draufsicht auf ein weiteres Ausführungsbeispiel auf eine Verkehrssituation mit zwei unterschiedlichen Umgebungsfreiraumsituationen;
- Fig. 3: eine Draufsicht auf ein drittes Ausführungsbeispiel einer Verkehrssituation mit zwei Umgebungsfreiraumsituationen; und
- Fig. 4: eine Draufsicht auf ein viertes Ausführungsbeispiel einer Verkehrssituation mit zwei Umgebungsfreiraumsituationen.

In den Figuren werden gleiche oder funktionsgleiche Elemente mit den gleichen Bezugszeichen versehen.

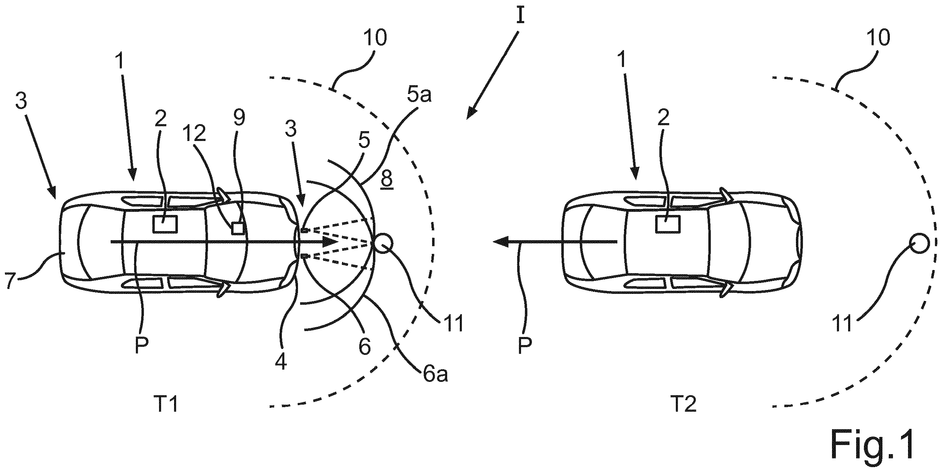

In Fig. 1 ist in einer Draufsicht die Darstellung einer Verkehrssituation I gezeigt, die in zwei verschiedenen Zeitpunkten gezeigt ist. Auf der linken Seite ist die Verkehrssituation I zu einem Zeitpunkt T1 dargestellt, wohingegen die Verkehrssituation I, die sich über einen gewissen Zeitraum erstreckt, auf der rechten Seite in einem zeitlich zum Zeitpunkt T1 nachfolgenden Zeitpunkt T2 gezeigt ist. Ein Kraftfahrzeug 1 bewegt sich dabei ausgehend von dem Zeitpunkt T1 in Richtung eines Pfeils P. Das Kraftfahrzeug 1 umfasst ein Fahrerassistenzsystem 2, welches zumindest eine Steuereinheit und zumindest eine Auswerteeinheit aufweist. Das Kraftfahrzeug 1 umfasst darüber hinaus auch eine Sensoreinrichtung, insbesondere eine Ultraschallsensoreinrichtung 3, die an einem Frontbereich 4 des Kraftfahrzeugs 1 eine Mehrzahl von Sensoren, insbesondere Ultraschallsensoren 5 und 6 als auch an einem Heckbereich 7 eine Mehrzahl derartiger Ultraschallsensoren aufweist. Die Anzahl der Ultraschallsensoren 5 und 6 ist lediglich beispielhaft zu verstehen und kann auch davon abweichen, insbesondere jeweils zumindest drei Ultraschallsensoren aufweisen. In einem Umgebungsbereich 8 des Kraftfahrzeugs 1 können Objekte angeordnet sein, die mittels der Ultraschallsensoren 5 und 6 detektiert werden können. Dabei sendet zumindest ein Ultraschallsensor 5, 6, vorzugsweise beide Ultraschallsensoren 5, 6 Ultraschallsignale 5a und 6a aus, die von den Ultraschallsensoren 5, 6 wieder empfangen werden, wenn sie an einem Objekt im Umgebungsbereich 8 reflektiert werden. Das Kraftfahrzeug 1 umfasst darüber hinaus eine Anzeigeeinheit 9, die vorzugsweise im Kraftfahrzeug 1, insbesondere im Bereich eines Armaturenbretts beziehungsweise einer Armaturentafel ortsfest oder auch zerstörungsfrei entnehmbar, angeordnet ist. Auf dieser Anzeigeeinheit 9 wird der von den Ultraschallsensoren 5, 6 erfasste Umgebungsbereich 8 angezeigt. Dabei wird dieser Umgebungsbereich 8 in Ausmaßen angezeigt, die durch einen Erfassungsbereich 10, der durch die Ultraschallsensoren 5, 6 gegeben ist und die maximale Detektionsreichweite der Ultraschallsensoren 5, 6 darstellt, angezeigt. Im Ausführungsbeispiel ist vorgesehen, dass ein statisches Objekt 11 in dem Erfassungsbereich 10 angeordnet ist und bei der Bewegung des Kraftfahrzeug 1 auf das Objekt 11 hin dann detektiert wird. Dies erfolgt abhängig von der Art des Objekts 11 bei einem bestimmten Referenzabstand. So kann vorgesehen sein, dass dieses Objekt 11 bereits früher und somit in einem größeren Referenzabstand detektiert wird, wenn es größer und breitet ist. Ist das Objekt 11 hingegen relativ klein und schmal, so wird es erst bei einem kleineren Referenzabstand von den Ultraschallsensoren 5 und/oder 6 erfasst. Der Referenzabstand ist somit individuell und hängt von der Art des Objekts und/oder der Orientierung der Sensoren 5 und/oder 6 zum Objekt 11 ab. Im Beispiel ist das Objekt 11 tatsächlich vorhanden und daher kein nur vermeintliches Objekt das nicht vorhanden ist und fälschlich detektiert worden wäre.

Das Fahrerassistenzsystem 2 ist derart ausgebildet, dass zu zumindest zwei verschiedenen Zeitpunkten, beispielsweise den Zeitpunkten T1 und T2, eine Erfassung des Umgebungsbereichs 8 mit dem zumindest einen Ultraschallsensor 5 und/oder 6 durchgeführt wird. Abhängig von diesen abhängig von den Ultraschallsensorinformationen zu den Zeitpunkten T1 und T2 jeweils detektierten Umgebungsfreiraumsituationen wird entschieden, ob ein Objekt, im Ausführungsbeispiel das Objekt 11, bei einem Aktualisieren der digitalen Umgebungskarte 12, die auf der Anzeigeeinheit 9 vollständig oder teilweise angezeigt wird, und/oder insbesondere auch als eine von einer anderen Karte oder anderen Kartendaten abgeleitete Umgebungskarte 12, auf der Anzeigeeinheit 9 angezeigt werden kann, auf der dann aktualisierten Umgebungskarte 12 angezeigt wird.

Das Fahrerassistenzsystem 2 ist dabei auch derart ausgebildet, dass eine Mehrzahl von unterschiedlichen Konfidenzwerten definiert und vorgegeben wird. Die Konfidenzwerte charakterisieren dabei insbesondere auch die Existenzwahrscheinlichkeit eines Vorhandenseins eines Objekts und/oder die Position eines Objekts bei einem Objekterfassungsvorgang zumindest eines Ultraschallsensors 5, 6. Die Zuordnung eines spezifischen Konfidenzwertes zu einem Objekterfassungsvorgang erfolgt abhängig vorzugsweise von zumindest einer erfassten Umgebungsfreiraumsituation und/oder zumindest eines vorgegebenen Referenzfreiraums bzw. einer Referenzfreiraumsituation und/oder einem Vergleich zumindest einer Umgebungsfreiraumsituation mit einem Referenzfreiraum und/oder der Art eines Objekts.

Es ist dabei insbesondere vorgesehen, dass eine Mehrzahl von unterschiedlichen Referenzfreiräumen vorgegeben wird und zumindest abhängig von einem Vergleich der Umgebungsfreiraumsituationen zu den Zeitpunkten T1 und T2 mit zumindest einem Referenzfreiraum und/oder einem die Existenzwahrscheinlichkeit eines Objekts bei einem Objekterfassungsvorgang des Ultraschallsensors charakterisierenden Konfidenzwerts entschieden wird, ob die Anzeige oder Nicht-Anzeige des Objekts auf der aktualisierten Umgebungskarte erfolgt. Es wird dann auch die Umgebungskarte 12 aktualisiert. Eine Umgebungsfreiraumsituation ist in dem Zusammenhang insbesondere dahingehend zu verstehen, dass ein zumindest Teilraum des Umgebungsbereichs 8 im Hinblick auf die dortige Objektsituation beurteilt wird beziehungsweise entsprechend zu verstehen ist und somit dahingehend betrachtet wird, ob in diesem Raum ein oder mehrere Objekte vorhanden sind beziehungsweise wie frei dieser Raum von Objekten ist. In dem Zusammenhang ist in Fig. 1 zum Zeitpunkt T1 eine Umgebungsfreiraumsituation gegeben, bei welcher ein Objekt, nämlich das Objekt 11, sich darin befindet und in entsprechender Lage sich befindet, was insbesondere, wenn dies möglich ist zu detektieren, den Abstand und die Orientierung des Objekts 11 zu den Ultraschallsensoren 5 und/oder 6 betrifft.

Vorzugsweise wird abhängig von der Anzahl von in den Umgebungsfreiraumsituationen detektierten Objekten und/oder von der Art von den Umgebungsfreiraumsituationen detektierten Objekten und/oder der örtlichen Lage eines in zumindest einer Umgebungsfreiraumsituation detektierten Objekts zum Kraftfahrzeug 1 und/oder einer örtlichen Lageveränderung eines in den Umgebungsfreiraumsituationen detektierten Objekts zum Kraftfahrzeug ein spezifischer Referenzfreiraum aus der Mehrzahl der Referenzfreiräume für den Vergleich ausgewählt. Dazu wird vorzugsweise abhängig von der Anzahl von den in den Umgebungsfreiraumsituationen detektierten Objekten und/oder von der Art von den in den Umgebungsfreiraumsituationen detektierten Objekten und/oder der örtlichen Lage eines in zumindest einer Umgebungsfreiraumsituation detektierten Objekts zum Kraftfahrzeug 1 und/oder einer örtlichen Lageveränderung eines in den Umgebungsfreiraumsituationen detektierten Objekts zum Kraftfahrzeug 1 die Anzahl der für den Vergleich zu berücksichtigenden Referenzfreiräume bestimmt. Insbesondere ist vorgesehen, dass das Fahrerassistenzsystem 2 einen ersten Referenzfreiraum als Objektfreiraum abgespeichert aufweist, der dahingehend definiert wird, dass für die Bewertung eines Objekts insbesondere ein Abstand des Objekts zum Ultraschallsensor 5 und/oder 6 und die Orientierung des Objekts zum Ultraschallsensor 5 und/oder 6 und/oder die Häufigkeit, wie oft ein Objekt erfasst wurde, berücksichtigt werden, wobei auch weitere oder andere Kriterien berücksichtigt werden können.

Bei der Ausführung in Fig. 1 kann dann im Weiteren vorgesehen sein, dass sich das Kraftfahrzeug 1 auch nach dem erstmaligen Detektieren des Objekts 11, wodurch auch dann der bereits erwähnte Referenzabstand charakterisiert wird, an das Objekt 11 annähert. Zum Zeitpunkt T2, welcher durch das rechte Bild in Fig. 1 verdeutlicht ist, hat sich das Kraftfahrzeug 1 dann in entgegengesetzter Richtung zum Zeitpunkt T1 bewegt, sodass es bis zum Zeitpunkt T2 rückwärts fährt bzw. gefahren ist. Wie zum Zeitpunkt T2 zu erkennen ist, befindet sich das Objekt 11 dann zwar noch immer innerhalb des Erfassungsbereichs 10 der Ultraschallsensoren 5 und/oder 6, es weist jedoch einen größeren Abstand zu den Ultraschallsensoren 5 und/oder 6 auf, als es durch den Referenzabstand vorgegeben ist. Im Ausführungsbeispiel hat sich aufgrund der spezifischen Verkehrssituation I weder die Orientierung des Kraftfahrzeugs 1 zum Objekt geändert, noch ist das Objekt 11 als dynamisches Objekt vorgegeben. Es ist in dem Fall ein statisches Objekt 11. Aufgrund der Ausgestaltung des Objekts 11 wird zum Zeitpunkt T2 das Objekt 11 obwohl es noch im Erfassungsbereich 10 ist, nicht mehr von den Ultraschallsensoren 5 und/oder 6 erfasst.

Zum Vergleichen der Momentaufnahmen betreffend die Umgebungsfreiraumsituationen zu den Zeitpunkten T1 und T2 mit dem ersten Referenzfreiraum, nämlich dem oben erwähnten Objektfreiraum, wird der in der ersten Umgebungsfreiraumsituation erfasste Referenzabstandswert gespeichert. Aufgrund der hier geschilderten und individuellen Verkehrssituation I wird bei der in der zweiten Umgebungsfreiraumsituation zum Zeitpunkt T2 auftretenden relativen Lageveränderung zwischen dem Ultraschallsensor 5 und/oder 6 und dem Objekt 11 überprüft, ob das Objekt 11 in der zweiten Umgebungsfreiraumsituation erfasst wurde. Dies wurde, wie bereits oben erwähnt, im konkreten Ausführungsbeispiel als nicht gegeben beispielhaft erläutert. Bei einem derartigen nicht mehr Erfassen des Objekts 11 in der zweiten Umgebungsfreiraumsituation zum Zeitpunkt T2 wird dann hier vorgesehen, dass das Objekt 11 auf der aktualisierten Umgebungskarte 12 aufgrund der Kriterien des ersten Referenzfreiraums und insbesondere eines spezifischen Konfidenzwerts, nämlich des Aktiv-Konfidenzwerts, nicht mehr angezeigt wird. Insbesondere kann das Objekt aber noch, insbesondere in einer vorhergehenden oder alternativen Umgebungskarte, abgespeichert bleiben.

Bei der spezifischen Verkehrssituation I kann jedoch, und dies wird vorzugsweise auch entsprechend durchgeführt, ein zweiter Referenzfreiraum, der als Sensorfreiraum definiert wird, in einem weiteren Vergleich mit den Umgebungsfreiraumsituationen berücksichtigt werden. Der Sensorfreiraum wird dahingehend definiert, dass für die Bewertung eines Objekts berücksichtigt wird, ob es in einer Umgebungsfreiraumsituation zwar im Erfassungsbereich eines Ultraschallsensors sich befindet, jedoch nicht vom Ultraschallsensor das Objekt erfasst wird. Ein derartiges Beispiel ist zum Zeitpunkt T2 bereits erläutert worden.

Beim Vergleichen der Umgebungsfreiraumsituationen mit dem zweiten Referenzfreiraum, nämlich dem Sensorfreiraum, wird allgemein ein Objekt auf der zu aktualisierenden Umgebungskarte 12 angezeigt, wenn ein Objekt in der ersten Umgebungsfreiraumsituation von dem Ultraschallsensor 5 und/oder 6 erfasst wurde, in der zweiten Umgebungsfreiraumsituation aber das Objekt nicht mehr von dem Ultraschallsensor 5 und/oder 6 erfasst wurde, jedoch zumindest angenommen werden kann, dass sich das Objekt weiterhin im Erfassungsbereich 10 des Ultraschallsensors 5 und/oder 6 befindet. Insbesondere wird hier dann auch auf weitere Konfidenzwerte zurückgegriffen, die insbesondere durch die bereits oben definierten Verfolgungs-Konfidenzwert und Löschungs-Konfidenzwert erfolgen. Es wird gemäß dem Ausführungsbeispiel in Fig. 1 dann eine Situation erkannt, bei welcher der Verfolgungs-Konfidenzwert berücksichtigt wird. Würde die Verkehrssituation I zu den Zeitpunkten T1 und T2 lediglich anhand des Objektfreiraums beurteilt, so würde das Objekt 11 auf der aktualisierten Umgebungskarte 12 nicht mehr angezeigt werden, denn es wird zum Zeitpunkt T2, insbesondere anhand der Kriterien Abstand und Orientierung zum Kraftfahrzeug 1, nicht mehr detektiert. Aufgrund der zusätzlichen Berücksichtigung des Sensorfreiraums und/oder des Verfolgungs-Konfidenzwerts wird durch die dann zusätzlichen Vergleiche mit den Umgebungsfreiraumsituationen zu den Zeitpunkten T1 und T2 jedoch mit einer modellbasierten Wahrscheinlichkeit und/oder einer bevorzugten Prioritätenliste Referenzfreiräume und/oder Konfidenzwerte der Entscheidungsprüfung eine Situation erkannt, bei welcher zum Zeitpunkt T2 das Objekt 11 noch mit einer entsprechend hohen Wahrscheinlichkeit im Erfassungsbereich 10 vermutet werden kann, aufgrund der bereits oben genannten Parameter jedoch vom Ultraschallsensor 5 und/oder 6 nicht mehr detektiert werden kann. Eine derartige Situation wird dann aufgrund der Vergleiche, der spezifisch für die Vergleiche verwendeten Referenzräume, der spezifisch gegebenen Umgebungsfreiraumsituationen und der spezifischen Konfidenzwerte entschieden, dass das Objekt 11 dennoch auf der aktualisierten Umgebungskarte 12 angezeigt werden soll, da mit einer modellbasierten angenommenen Wahrscheinlichkeit noch davon ausgegangen werden kann, dass das Objekt 11 im Erfassungsbereich 10 sich befindet.

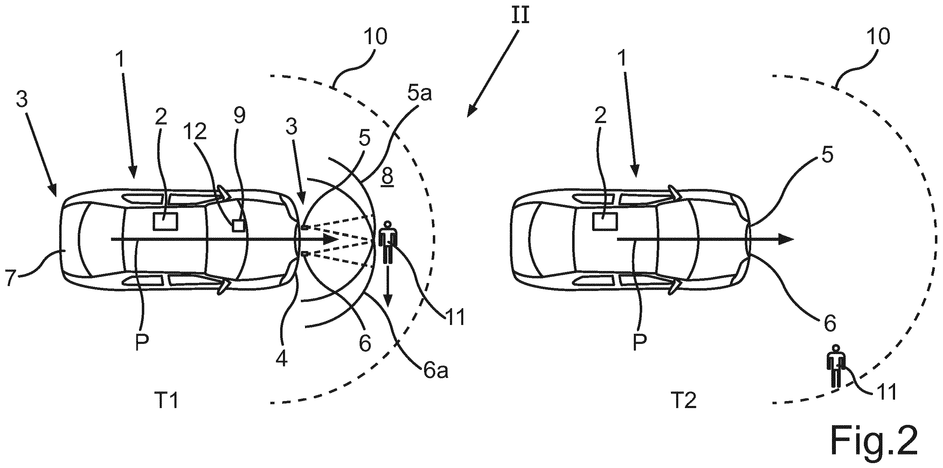

In Fig. 2 ist eine weitere Verkehrssituation II gezeigt, bei welcher wiederum zwei Umgebungsfreiraumsituationen zu den Zeitpunkten T1 (linkes Bild in Fig. 2) und zum Zeitpunkt T2 (rechtes Bild in Fig. 2) charakterisiert werden. Bei dieser Ausgestaltung ist im Unterschied zur Darstellung in Fig. 1 vorgesehen, dass ein Objekt nicht statisch ist, sondern dass ein Objekt 11 sich relativ zum Kraftfahrzeug 1 bewegt, beispielsweise ein Fußgänger oder ein Radfahrer oder dergleichen sein kann. Darüber hinaus ist hier vorgesehen, dass sich das Objekt 11 nicht parallel zur Bewegungsrichtung gemäß dem Pfeil P bewegt, sondern in einem gewissen Winkel sich dazu bewegt, insbesondere relativ senkrecht zur Bewegungsrichtung des Fahrzeugs den Fahrweg des Kraftfahrzeugs 1 kreuzt.

Das Fahrerassistenzsystem 2 hat auch einen dritten Referenzfreiraum als Aktivfreiraum definiert und abgespeichert, wobei dieser Aktivfreiraum dahingehend gesehen werden kann, dass der Raum zwischen einem Ultraschallsensor 5 und/oder 6 und einem durch den Ultraschallsensor 5 und/oder 6 erfassten Objekt frei von zum erfassten Objekt vergleichbar hohen Objekten, insbesondere frei von Objekten größer einem definierten Höhenschwellwert, betrachtet wird. Beim Vergleichen der Umgebungsfreiraumsituationen mit dem dritten Referenzfreiraum wird ein in zumindest einer Umgebungsfreiraumsituation vermeintlich zwischen dem Ultraschallsensor 5 und/oder 6 und dem erfassten Objekt erfasstes, insbesondere zum erfassten Objekt vergleichbar hohes Objekt auf der aktualisierten Karte, insbesondere aufgrund eines spezifischen Konfidenzwerts, nicht angezeigt.

Bei der Verkehrssituation II in Fig. 2 ist insbesondere zum Zeitpunkt T2 auf Basis des Vergleichs der Umgebungsfreiraumsituationen zu den Zeitpunkten T1 und T2 mit dem Objektfreiraum eine Situation gegeben, bei welcher aufgrund der Lageveränderung zwischen dem Kraftfahrzeug 1 und dem Objekt 11 zum Zeitpunkt T2 im Vergleich zum Zeitpunkt T1, insbesondere aufgrund der Änderung der Orientierung, das Objekt 11 zum Zeitpunkt T2 nicht mehr erkannt werden kann. Aufgrund dieser Vergleichsbeurteilung würde im Lichte des Objektfreiraums das Objekt 11 auf der aktualisierten Umgebungskarte 12 nicht mehr angezeigt werden. Aufgrund des vorzugsweise weiteren Vergleichs mit dem Sensorfreiraum wird jedoch eine Situation erkannt, bei welcher aufgrund des Konfidenzwerts, der spezifisch zugeordnet ist, insbesondere des Löschungs-Konfidenzwerts, eine Situation beurteilt, bei welcher nicht ausgeschlossen werden kann, dass das nicht detektierte Objekt 11 zum Zeitpunkt T2 dennoch innerhalb des Erfassungsbereichs 10 sein könnte, jedoch die Wahrscheinlichkeit, dass es außerhalb des Erfassungsbereichs 10 ist, als höher eingestuft wird. Es kann bei dieser Situation abhängig von weiteren Kriterien vorgesehen sein, dass bei der aktualisierten Umgebungskarte 12 das Objekt 11 dennoch dann angezeigt wird.

Bei beiden bisher erläuterten Ausführungsbeispielen gemäß Fig. 1 und Fig. 2 kann auch vorzugsweise die weitere Berücksichtigung des Aktivfreiraums erfolgen und ein entsprechender Vergleich mit den Umgebungsfreiraumsituationen zu den Zeitpunkten T1 und T2 erfolgen. Dadurch können auch Entscheidungen über erfasste oder aber auch nicht erfasste Objekte in einem Raum zwischen einem Ultraschallsensor 5 und/oder 6 und dem Objekt 11 erfolgen, insbesondere, wenn diese kleiner einem Höhenschwellwert sind. Dadurch können fälschlicherweise angezeigte Objekte in dem Aktivfreiraum oder fälschlich nicht angezeigte Objekte korrigiert werden beziehungsweise eine Beurteilung darüber erfolgen, mit welcher Wahrscheinlichkeit diese vorhanden sind oder nicht vorhanden sind und mit welcher Wahrscheinlichkeit dann sie bevorzugt angezeigt werden sollten oder nicht angezeigt werden sollten.

Entsprechend kann auch insbesondere eine Berücksichtigung des Hintergrundfreiraums und ein Vergleich mit den Umgebungsfreiraumsituationen erfolgen.

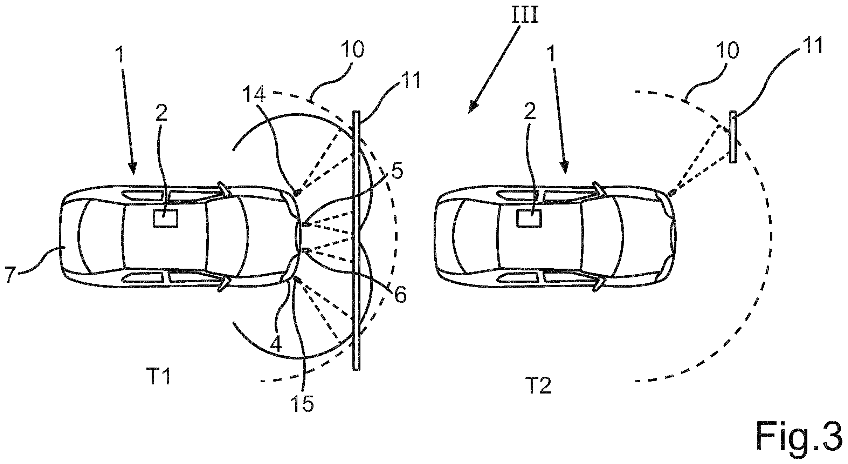

In Fig. 3 ist in einer weiteren Darstellung ein Ausführungsbeispiel einer weiteren unterschiedlichen Verkehrssituation III zu den verschiedenen Zeitpunkten T1 und T2, die Umgebungsfreiraumsituationen darstellen, gezeigt. Bei dieser Ausführung ist im Unterschied zu Fig. 1 und Fig. 2 das Kraftfahrzeug 1 sowohl zu dem Zeitpunkt T1 als auch zu dem Zeitpunkt T2 nicht bewegt und somit stillstehend, und auch in dem Zeitraum zwischen den Zeitpunkten T1 und T2 wurde das Fahrzeug 1 nicht weiterbewegt. Vor dem Kraftfahrzeug 1 ist im Umgebungsbereich 8 ein Objekt 11 gezeigt, welches beispielsweise ein Garagentor ist, welches sich dynamisch und somit relativ zum stillstehenden Kraftfahrzeug 1 bewegt. Wie dabei zu erkennen ist, ist zum Zeitpunkt T1 das Objekt 11 in Form des Garagentors quasi noch geschlossen, wobei es zum Zeitpunkt T2 zumindest schon über eine relativ große Weite geöffnet ist. Das Ausführungsbeispiel in Fig. 3 charakterisiert somit eine Ausführungsform, bei welcher auch durch die Ultraschallsensoren 5 und/oder 6 auf Basis von kraftfahrzeugseitigen Informationen, insbesondere im Stillstehen des Kraftfahrzeugs 1, auch zwischen einem dynamischen und einem statischen Objekt 11 unterschieden werden kann, welches somit in Fig. 3 als dynamisches Objekt charakterisiert werden kann.

Aufgrund dieser erkannten Dynamik und einem quasi Wegbewegen des Objekts 11 vom Kraftfahrzeug 1 wird bei dieser Ausführung das Objekt 11 auf der aktualisierten Umgebungskarte 12 nicht mehr angezeigt.

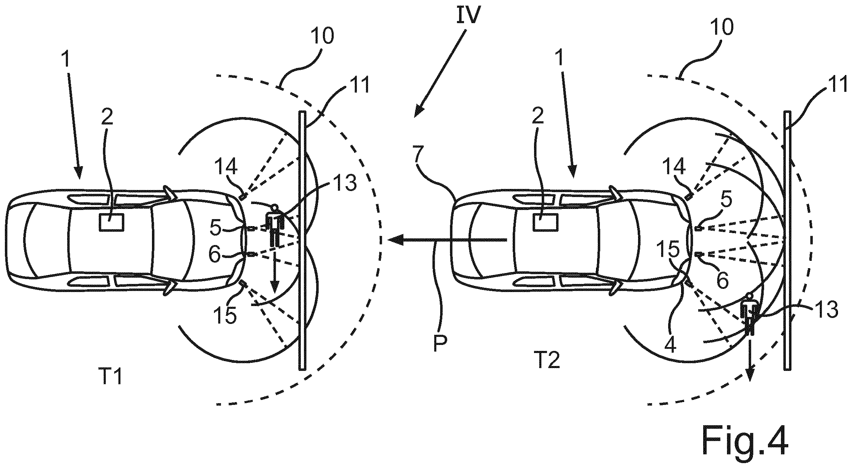

In Fig. 4 ist in einer Draufsicht ein weiteres Ausführungsbeispiel gezeigt, bei welchem eine Verkehrssituation IV in zwei Momentaufnahmen anhand der jeweils vorhandenen Gegebenheit zu den Zeitpunkten T1 und T2 als Umgebungsfreiraumsituationen gezeigt ist. In der auch hier gezeigten Draufsicht ist das Objekt 11 ein statisches und somit ortsfestes Objekt, beispielsweise eine Wand, insbesondere eine relativ hohe Wand. Insbesondere ist zum Zeitpunkt T1 das Kraftfahrzeug 1 ebenfalls stillstehend, und zwischen dem Kraftfahrzeug 1, insbesondere den frontseitigen Ultraschallsensoren 5 und/oder 6, und dem Objekt 11 ist ein weiteres Objekt 13 vorhanden, welches sich im gezeigten Ausführungsbeispiel im Zeitintervall zwischen T1 und T2 relativ zum Objekt 11 und zum Kraftfahrzeug 1 bewegt, insbesondere im Wesentlichen quer zur Fahrzeuglängsachse sich bewegt. Sowohl beim Ausführungsbeispiel in Fig. 3 als auch beim Ausführungsbeispiel in Fig. 4 sind im zumindest Frontbereich des Kraftfahrzeugs 1 weitere Ultraschallsensoren 14 und 15 angeordnet. Zum Zeitpunkt T2 hat sich das Kraftfahrzeug 1 im Vergleich zum Zeitpunkt T1 in Richtung des Pfeils P von dem Objekt 11 wegbewegt, und somit ist eine relative Lageveränderung zwischen dem Objekt 11 und dem Kraftfahrzeug 1 aufgetreten. Entsprechendes ist auch zwischen dem Kraftfahrzeug 1 und dem beispielsweise als Fußgänger oder Radfahrer ausgebildeten weiteren Objekt 13 aufgetreten. Bezüglich der Beurteilung, ob das Objekt 11 auf der aktualisierten Umgebungskarte 12 enthalten sein soll oder nicht und auch dann angezeigt werden soll oder nicht, darf auf das Beispiel in Fig. 1 verwiesen werden. Bezüglich des Objekts 13 wird hier insbesondere auch der Aktivfreiraum als Referenzfreiraum zum Vergleich mit den Umgebungsfreiraumsituationen herangezogen. Aufgrund dieses Vergleichs, insbesondere eines zu berücksichtigenden spezifischen Konfidenzwerts, würde das Objekt 13 auf der aktualisierten Umgebungskarte 12 nicht mehr angezeigt werden, wenn es zum Zeitpunkt T2 als nicht mehr im Erfassungsbereich 10 vermutet wird oder diesbezüglich explizit nicht mehr im Erfassungsbereich 10 erkannt wird. Dies erfolgt, obwohl die Bedingungen des Objektfreiraums als nicht erfüllt geltend beurteilt werden, da das Kraftfahrzeug 1 sich vom Objekt 13 wegbewegt.

Insbesondere bei den Ausführungsbeispielen gemäß Fig. 1 und 2 wird der Aktivfreiraum dahingehend definiert, dass er sich von den Ultraschallsensoren 5 und/oder 6 bis hin zum Objekt 11 bemisst. Die den Ultraschallsensoren 5 und/oder 6 abgewandte Begrenzung beziehungsweise der Rand dieses Aktivfreiraums ist vorzugsweise durch die Orientierung des Objekts 11 gegeben, und somit erstreckt sich diese abgewandte Grenze des Aktivfreiraums parallel oder in die gleiche Richtung wie die Orientierung des Objekts 11 ist. Der sich dann von dieser abgewandten Grenze des Aktivfreiraums bis zum Ende des Erfassungsbereichs 10 beziehungsweise dessen maximale Limitierung erstreckende Raum ist dann der bereits angesprochene Hintergrundfreiraum. Dieser Hintergrundfreiraum kann dann insbesondere bei den Ausführungsbeispielen gemäß Fig. 1 und Fig. 2 auch noch berücksichtigt werden und ein Vergleich mit den Umgebungsfreiraumsituationen dahingehend erfolgen, ob in diesem Hintergrundfreiraum ein Objekt fälschlicherweise erfasst wurde oder fälschlicherweise nicht erfasst wurde. In der aktualisierten Umgebungskarte 12 kann dann auch diese Beurteilung berücksichtigt werden und abhängig dann von der Entscheidungsprüfung auf der aktualisierten Umgebungskarte 12 auch dann Objekte in diesem Hintergrundfreiraum angezeigt werden oder eben dann auch nicht angezeigt werden.

Vorzugsweise werden bei der Entscheidungsprüfung situationsabhängig jeweils eine maximale Anzahl von möglichen Referenzfreiräumen zu den Vergleichen berücksichtigt, so dass eine maximale Genauigkeit der Beurteilung der realen Situation bezüglich vorhandener und anzuzeigender Objekte genüge getan wird. So ist es bevorzugt, dass bei den Beispielen in Fig.1 und 2 alle vier Referenzfreiräume berücksichtigt werden, da alle damit charakterisierten Teilräume des Erfassungsbereichs aufgrund der tatsächlichen Verkehrssituation I und II zugänglich sind. Bei den Beispielen in Fig. 3 und 4 trifft dies nicht zu. Aufgrund der hohen statischen Wand im Beispiel gemäß Fig. 4 ist der Hintergrundfreiraum hier irrelevant und zum Vergleich nicht heranzuziehen.

Bei allen Ausführungsbeispielen können auch zu zumindest einem weiteren, auf den Zeitpunkt T2 folgenden Zeitpunkt Umgebungsfreiraumsituationen erfasst und dann auf Basis von zumindest drei Umgebungsfreiraumsituationen, insbesondere abhängig von einem Vergleich mit Referenzfreiräumen und/oder Konfidenzwerten, entschieden werden, ob ein Objekt in einer aktualisierten Umgebungskarte enthalten sein soll, und insbesondere bei einer zumindest teilweisen Anzeige der aktualisierten Umgebungskarte auf einer Anzeigeeinheit auch angezeigt werden soll.

Abschließend sei noch explizit erwähnt, dass die erläuterten Ausführungsbeispiele lediglich eine kleine Anzahl von möglichen Verkehrssituationen darstellen. Durch die Ausführungsbeispiele ist jedoch zumindest jeweils eine explizite Darstellung gezeigt, um die angesprochenen Referenzfreiräume, insbesondere mit zugehörigen beziehungsweise zugeordneten Konfidenzwerten, beispielhaft zu erläutern. Es sei hier auch insbesondere erwähnt, dass es eine nahezu beliebige Anzahl von individuell zu gestaltenden Verkehrssituationen gibt, die sich mit sich bewegendem Kraftfahrzeug und ein oder mehreren sich bewegenden Objekten mit unterschiedlichen Abständen und unterschiedlichen Bewegungsrichtungen zum Kraftfahrzeug und/oder ein oder mehreren statischen Objekten mit unterschiedlichen Orientierungen und/oder Abständen zu dem Kraftfahrzeug darstellen lassen. Entsprechendes ist auch möglich für ein zu den zumindest beiden Zeitpunkten stillstehendes und in diesem Zeitintervall zwischen den Zeitpunkten sich auch nicht zwischenzeitlich bewegendem Kraftfahrzeug mit dann auch einem oder mehreren dynamischen Objekten, die in Lage und/oder Bewegungsrichtung und/oder Geschwindigkeit unterschiedlich zu dem Kraftfahrzeug 1 sich gestalten können und/oder ein oder mehrere statische Objekte aufweisen, die sich in Orientierung und Abstand zu dem Kraftfahrzeug unterschiedlich darstellen können. Bei all diesen vielzählige Varianten bildenden Ausführungsbeispielen kann dann abhängig von der Situation, wie auch bereits oben allgemein dargelegt, die Anzahl der zum Vergleich heranzuziehenden Referenzfreiräume und/oder die Reihenfolge der für die Beurteilung und den Vergleich heranzuziehenden Referenzfreiräume erfolgen. Selbiges gilt auch für die Konfidenzwerte. Es sei hier auch nochmals betont, dass im Rahmen der oben gegebenen allgemeinen Offenbarungen und Darlegungen diese auch spezifischen vielzähligen Ausführungsvarianten als dargestellt und offenbart angesehen werden und die anhand der Fig. 1 bis Fig. 4 beispielhaft herausgegriffenen Ausführungsbeispiele ebenfalls als erläutert gelten. Da sich gerade bezüglich der oben genannten unterschiedlichen, vielfältigst individuell gestaltbaren Verkehrssituationen aber auch unter Berücksichtigung dann der Art der Objekte spezifizierteste Individualbeispiele bildend lassen, sollen hier im Lichte einer überschaubaren Darstellung lediglich die Einflussfaktoren, um derartige Varianten zu bilden, erläutert sein, wie dies oben geschehen ist.

Es sollte verstanden werden, dass, obwohl die Ausführungsbeispiele einen Ultraschallsensor umfassen, der Sensor generell jeder geeignete kraftfahrzeugseitige Umfelderfassungssensor sein kann oder es kann eine Kombination mehrerer Umfelderfassungssensoren verwendet werden. Beispielsweise kann der Sensor auch ein Radarsensor, eine Kamera oder ein Laserscanner sein. Insbesondere kann eine Kombination aus Ultraschallsensor, Radarsensor, Kamera und/oder Laserscanner verwendet werden.

## Patentansprüche

1. Verfahren zum Erzeugen einer Umgebungskarte (12) eines Umgebungsbereichs (8) eines Kraftfahrzeugs (1), bei welchem der Umgebungsbereich (8) mit zumindest einem kraftfahrzeugseitigen Sensor (5, 6, 14, 15) erfasst wird,
wobei zu zumindest zwei verschiedenen Zeitpunkten (T1, T2) eine Erfassung des Umgebungsbereichs (8) mit dem zumindest einen Sensor (5, 6, 14, 15) durchgeführt wird und abhängig von diesen abhängig von Sensorinformationen zu den Zeitpunkten (T1, T2) jeweils detektierten Umgebungsfreiraumsituationen entschieden wird, ob ein in zumindest in einer Umgebungsfreiraumsituation zumindest vermeintlich im Umgebungsbereich (8) befindliches Objekt (11, 13) bei einem Aktualisieren der Umgebungskarte (12) auf der dann aktualisierten Umgebungskarte (12) umfasst wird, **dadurch gekennzeichnet, dass** eine Mehrzahl von unterschiedlichen Referenzfreiräumen vorgegeben wird und zumindest abhängig von einem Vergleich der Umgebungsfreiraumsituationen mit zumindest einem Referenzfreiraum und einem eine Existenzwahrscheinlichkeit eines Objekts (11, 13) in einem Umgebungsbereich (8) bei einem Objekterfassungsvorgang des Sensors (5, 6, 14, 15) charakterisierenden Konfidenzwerts das Enthaltensein oder Nicht-Enthaltensein des Objekts in der aktualisierten Umgebungskarte (12) erfolgt.

2. Verfahren nach Anspruch 1,
**dadurch gekennzeichnet, dass**
eine Existenzwahrscheinlichkeit eines Objekts (11, 13) in einem Umgebungsbereich (8) bei einem Objekterfassungsvorgang des Sensors (5, 6, 14, 15) mit einem von mehreren unterschiedlichen Konfidenzwerten charakterisiert wird.

3. Verfahren nach Anspruch 2,
**dadurch gekennzeichnet, dass**
die Zuordnung eines spezifischen Konfidenzwerts zu einem Objekterfassungsvorgang abhängig von zumindest einer erfassten Umgebungsfreiraumsituation und/oder zumindest eines vorgegebenen Referenzfreiraums und/oder einem Vergleich zumindest einer Umgebungsfreiraumsituation mit einem Referenzfreiraum und/oder der Art eines Objekts (11, 13) durchgeführt wird.

4. Verfahren nach einem der Ansprüche 1 bis 3,
**dadurch gekennzeichnet, dass**
abhängig von der Anzahl von in den Umgebungsfreiraumsituationen detektierten Objekten (11, 13) und/oder von der Art von in den Umgebungsfreiraumsituationen detektierten Objekten (11, 13) und/oder der örtlichen Lage eines in zumindest einer Umgebungsfreiraumsituation detektierten Objekts (11, 13) zum Kraftfahrzeug (1) und/oder einer örtlichen Lageveränderung eines in den Umgebungsfreiraumsituationen detektierten Objekts (11, 13) zum Kraftfahrzeug (1) ein spezifischer Referenzfreiraum aus der Mehrzahl der Referenzfreiräume für den Vergleich ausgewählt wird.

5. Verfahren nach einem der Ansprüche 1 bis 4,
**dadurch gekennzeichnet, dass**
abhängig von der Anzahl von in den Umgebungsfreiraumsituationen detektierten Objekten (11, 13) und/oder von der Art von in den Umgebungsfreiraumsituationen detektierten Objekten (11, 13) und/oder der örtlichen Lage eines in zumindest einer Umgebungsfreiraumsituation detektierten Objekts (11, 13) zum Kraftfahrzeug (1) und/oder einer örtlichen Lageveränderung eines in den Umgebungsfreiraumsituationen detektierten Objekts (11, 13) zum Kraftfahrzeug (1) die Anzahl der für den Vergleich zu berücksichtigenden Referenzfreiräume bestimmt wird.

6. Verfahren nach einem der Ansprüche 3 bis 5,
**dadurch gekennzeichnet, dass**
ein erster Referenzfreiraum als Objektfreiraum definiert wird, bei welchem für die Bewertung eines Objekts (11, 13) ein Abstand des Objekts (11, 13) zum Sensor (5, 6, 14, 15) und die Orientierung des Objekts (11, 13) zum Sensor (5, 6, 14, 15) berücksichtigt werden.

7. Verfahren nach Anspruch 6,
**dadurch gekennzeichnet, dass**
zum Vergleichen der Umgebungsfreiraumsituationen mit dem ersten Referenzfreiraum in der ersten Umgebungsfreiraumsituation ein erfasster Abstandswert bei einer spezifischen Orientierung des Objekts (11, 13), bei welchem das Objekt (11, 13) erstmals detektiert wurde als Referenzabstandswert, gespeichert wird, und zumindest bei einer in der zweiten Umgebungsfreiraumsituation auftretenden relativen Lageveränderung zwischen dem Sensor (5, 6, 14, 15) und dem Objekt (11, 13) überprüft wird, ob das Objekt (11, 13) in der zweiten Umgebungsfreiraumsituation erfasst wurde, wobei bei einem nicht mehr Erfassen des Objekts (11, 13) in der zweiten Umgebungsfreiraumsituation durch den Sensor (5, 6, 14, 15) das Objekt (11, 13) auf der aktualisierten Umgebungskarte (12) aufgrund der Kriterien des ersten Referenzfreiraums, insbesondere auch eines spezifischen Konfidenzwerts, nicht mehr angezeigt wird.

8. Verfahren nach einem der Ansprüche 1 bis 7,
**dadurch gekennzeichnet, dass**
ein zweiter Referenzfreiraum als Sensorfreiraum definiert wird, bei welchem für die Bewertung eines Objekts (11, 13) berücksichtigt wird, ob es in einer Umgebungsfreiraumsituation zwar im Erfassungsbereich des Sensors (5, 6, 14, 15) sich befindet jedoch nicht vom Sensor (5, 6, 14, 15) als Objekt (11, 13) erfasst wird.

9. Verfahren nach Anspruch 8,
**dadurch gekennzeichnet, dass**
beim Vergleichen der Umgebungsfreiraumsituationen mit dem zweiten Referenzfreiraum ein Objekt (11, 13) auf der aktualisierten Umgebungskarte (12), insbesondere auch aufgrund eines spezifischen Konfidenzwerts, angezeigt wird, wenn ein Objekt (11, 13) in der ersten Umgebungsfreiraumsituation von dem Sensor (5, 6, 14, 15) erfasst wurde, in der zweiten Umgebungsfreiraumsituation aber das Objekt (11, 13) nicht mehr von dem Sensor (5, 6, 14, 15) erfasst wurde jedoch zumindest angenommen werden kann, dass sich das Objekt (11, 13) weiterhin im Erfassungsbereich (10) des Sensors (5, 6, 14, 15) befindet.

10. Verfahren nach einem der Ansprüche 1 bis 9,
**dadurch gekennzeichnet, dass**
ein dritter Referenzfreiraum als Aktivfreiraum definiert wird, bei welchem der Raum zwischen dem Sensor (5, 6, 14, 15) und einem durch den Sensor (5, 6, 14, 15) erfassten Objekt (11, 13) als frei von zum erfassten Objekt (11, 13) vergleichbar hohen Objekten, insbesondere frei von Objekten größer einem Höhenschwellwert, betrachtet wird.

11. Verfahren nach Anspruch 10,
**dadurch gekennzeichnet, dass**
beim Vergleichen der Umgebungsfreiraumsituationen mit dem dritten Referenzfreiraum ein in zumindest einer Umgebungsfreiraumsituation vermeintlich zwischen dem Sensor (5, 6, 14, 15) und dem erfassten Objekt (11, 13) erfasstes, insbesondere zum erfassten Objekt (11, 13) vergleichbar hohes, Objekt auf der aktualisierten Umgebungskarte (12), insbesondere aufgrund eines spezifischen Konfidenzwerts, nicht angezeigt wird.

12. Verfahren nach einem der Ansprüche 10 oder 11,
**dadurch gekennzeichnet, dass**
ein vierter Referenzfreiraum als Hintergrundfreiraum definiert wird, bei welchem ein Objekt (11, 13) in einem Raum des Erfassungsbereichs (10) des Sensors (5, 6, 14, 15) betrachtet wird, das sich auf der dem Sensor (5, 6, 14, 15) abgewandten Seite im Anschluss an den Aktivfreiraum und/oder Sensorfreiraum erstreckt.

13. Verfahren nach Anspruch 12,
**dadurch gekennzeichnet, dass**
beim Vergleichen der Umgebungsfreiraumsituationen mit dem vierten Referenzfreiraum abhängig von einem Konfidenzwert eines in dem Hintergrundfreiraum zumindest in einer Umgebungsfreiraumsituation erfassten Objekts (11, 13) entschieden wird, ob das Objekt (11, 13) auf der aktualisierten Umgebungskarte (12) angezeigt wird.

14. Verfahren nach einem der Ansprüche 1 bis 13,
**dadurch gekennzeichnet, dass**
bei einem Vergleichen, bei welchem zumindest zwei verschiedene Referenzfreiräume berücksichtigt werden, und aufgrund eines Vergleichs mit einem Referenzfreiraum das Objekt (11, 13) auf der aktualisierten Umgebungskarte (12) angezeigt werden soll und aufgrund eines Vergleichs mit einem anderen Referenzfreiraum das Objekt (11, 13) auf der aktualisierten Umgebungskarte (12) nicht angezeigt wird, eine weitere Entscheidungsprüfung durchgeführt wird.

15. Verfahren nach Anspruch 14,
**dadurch gekennzeichnet, dass**
die Entscheidungsprüfung dahingehend erfolgt, dass eine Anzeige auf der aktualisierten Umgebungskarte (12) erfolgt, wenn zumindest bei einem Vergleich mit einem Referenzfreiraum eine Anzeige erfolgen soll oder die Referenzfreiräume gewichtet werden und abhängig von der Gewichtung entschieden wird, ob ein Anzeigen auf der aktualisierten Umgebungskarte (12) erfolgt, oder aufgrund der durch die zeitliche Reihenfolge der beiden Umgebungsfreiraumsituationen erhaltenen Änderungen der Umgebungsfreiraumsituationen entschieden wird, ob ein Anzeigen auf der aktualisierten Umgebungskarte (12) erfolgt.

16. Verfahren nach einem der vorhergehenden Ansprüche,
**dadurch gekennzeichnet, dass**
der Umgebungsbereich (8) mit zumindest einem kraftfahrzeugseitigen Ultraschallsensor (5, 6, 14, 15) erfasst wird.

17. Fahrerassistenzsystem (2), welches zumindest eine Sensor (5, 6, 14, 15) und eine Auswerteeinheit aufweist, und welches zum Durchführen eines Verfahrens nach einem der vorhergehenden Ansprüche ausgebildet ist.

18. Kraftfahrzeug (1) mit einem Fahrerassistenzsystem (2) nach Anspruch 17.

## Claims

1. Method for generating a surroundings map (12) of a surroundings area (8) of a motor vehicle (1), in which method the surroundings area (8) is captured by way of at least one sensor (5, 6, 14, 15) on the motor vehicle,
wherein
capturing of the surroundings area (8) by way of the at least one sensor (5, 6, 14, 15) is performed at at least two different points in time (T1, T2), and in a manner dependent on said surroundings clearance situations detected in each case in a manner dependent on items of sensor information at the points in time (T1, T2), a decision is made as regards whether an object (11, 13) which is at least supposedly situated in the surroundings area (8) in at least one surroundings clearance situation is, upon an updating of the surroundings map (12), included on the then updated surroundings map (12),
**characterized in that**
a multiplicity of different reference clearances is predefined, and at least in a manner dependent on a comparison of the surroundings clearance situations with at least one reference clearance and on a confidence value which characterizes a probability of existence of an object (11, 13) in a surroundings area (8) during an object capture process of the sensor (5, 6, 14, 15), the object is rendered present or absent in the updated surroundings map (12).

2. Method according to Claim 1,
**characterized in that**
a probability of existence of an object (11, 13) in a surroundings area (8) during an object capture process of the sensor (5, 6, 14, 15) is characterized with one of several different confidence values.

3. Method according to Claim 2,
**characterized in that**
the assignment of a specific confidence value to an object capture process is performed in a manner dependent on at least one captured surroundings clearance situation and/or on at least one predefined reference clearance and/or on a comparison of at least one surroundings clearance situation with a reference clearance and/or on the nature of an object (11, 13).

4. Method according to one of Claims 1 to 3,
**characterized in that**,
in a manner dependent on the number of objects (11, 13) detected in the surroundings clearance situations and/or in a manner dependent on the nature of objects (11, 13) detected in the surroundings clearance situations and/or in a manner dependent on the spatial position of an object (11, 13) detected in at least one surroundings clearance situation relative to the motor vehicle (1) and/or in a manner dependent on a spatial change in position of an object (11, 13) detected in the surroundings clearance situations relative to the motor vehicle (1), a specific reference clearance is selected from the multiplicity of reference clearances for the comparison.

5. Method according to one of Claims 1 to 4,
**characterized in that**,
in a manner dependent on the number of objects (11, 13) detected in the surroundings clearance situations and/or in a manner dependent on the nature of objects (11, 13) detected in the surroundings clearance situations and/or in a manner dependent on the spatial position of an object (11, 13) detected in at least one surroundings clearance situation relative to the motor vehicle (1) and/or in a manner dependent on a spatial change in position of an object (11, 13) detected in the surroundings clearance situations relative to the motor vehicle (1), the number of reference clearances to be taken into consideration for the comparison is determined.

6. Method according to one of Claims 3 to 5,
**characterized in that**
a first reference clearance is defined as an object clearance in the case of which, for the evaluation of an object (11, 13), a spacing of the object (11, 13) to the sensor (5, 6, 14, 15) and the orientation of the object (11, 13) relative to the sensor (5, 6, 14, 15) are taken into consideration.

7. Method according to Claim 6,
**characterized in that**,
for the comparison of the surroundings clearance situations with the first reference clearance in the first surroundings clearance situation, a captured distance value in the presence of a specific orientation of the object (11, 13) at which the object (11, 13) was first detected is stored as a reference distance value, and at least in the event of a change in relative position between the sensor (5, 6, 14, 15) and the object (11, 13) occurring in the second surroundings clearance situation, it is checked whether the object (11, 13) has been captured in the second surroundings clearance situation, wherein, in the event of the object (11, 13) no longer being captured by the sensor (5, 6, 14, 15) in the second surroundings clearance situation, the object (11, 13) is no longer displayed on the updated surroundings map (12) on the basis of the criteria of the first reference clearance, in particular also of a specific confidence value.

8. Method according to one of Claims 1 to 7,
**characterized in that**
a second reference clearance is defined as a sensor clearance in the case of which, for the evaluation of an object (11, 13), it is taken into consideration whether, in a surroundings clearance situation, said object is duly in the capture area of the sensor (5, 6, 14, 15) but is not captured by the sensor (5, 6, 14, 15) as an object (11, 13).

9. Method according to Claim 8,
**characterized in that**
during the comparison of the surroundings clearance situations with the second reference clearance, an object (11, 13) is displayed on the updated surroundings map (12), in particular also on the basis of a specific confidence value, if an object (11, 13) has been captured by the sensor (5, 6, 14, 15) in the first surroundings clearance situation but, in the second surroundings clearance situation, the object (11, 13) has no longer been captured by the sensor (5, 6, 14, 15) but it can at least be assumed that the object also(11, 13) remains in the capture area (10) of the sensor (5, 6, 14, 15).

10. Method according to one of Claims 1 to 9,
**characterized in that**
a third reference clearance is defined as an active clearance in the case of which the space between the sensor (5, 6, 14, 15) and an object (11, 13) captured by the sensor (5, 6, 14, 15) is regarded as being free from objects of a height similar to the captured object (11, 13), in particular free from objects greater than a height threshold value.

11. Method according to Claim 10,
**characterized in that**
during the comparison of the surroundings clearance situations with the third reference clearance, an object which is supposedly captured between the sensor (5, 6, 14, 15) and the captured object (11, 13) in at least one surroundings clearance situation and which is in particular of a height similar to the captured object (11, 13) is not displayed on the updated surroundings map (12), in particular on the basis of a specific confidence value.

12. Method according to either of Claims 10 and 11,
**characterized in that**
a fourth reference clearance is defined as a background clearance in the case of which an object (11, 13) is considered which is in a space of the capture area (10) of the sensor (5, 6, 14, 15) extending, on the side averted from the sensor (5, 6, 14, 15), so as to adjoin the active clearance and/or sensor clearance.

13. Method according to Claim 12,
**characterized in that**,
during the comparison of the surroundings clearance situations with the fourth reference clearance, in a manner dependent on a confidence value of an object (11, 13) captured in the background clearance at least in one surroundings clearance situation, it is decided whether the object (11, 13) is displayed on the updated surroundings map (12).

14. Method according to Claim 1 to 13,
**characterized in that**,
in the case of a comparison in which at least two different reference clearances are taken into consideration and, on the basis of a comparison with a reference clearance, the object (11, 13) is to be displayed on the updated surroundings map (12) and, on the basis of a comparison with a different reference clearance, the object (11, 13) is not displayed on the updated surroundings map (12), a further decision check is performed.

15. Method according to Claim 14,
**characterized in that**
the decision check is performed such that a display on the updated surroundings map (12) is implemented if, at least in the case of a comparison with a reference clearance, a display is to be implemented, or the reference clearances are weighted and, in a manner dependent on the weighting, it is decided whether a display on the updated surroundings map (12) is implemented, or, on the basis of the changes to the surroundings clearance situations obtained as a result of the temporal sequence of the two surroundings clearance situations, it is decided whether a display on the updated surroundings map (12) is implemented.

16. Method according to one of the preceding claims,
**characterized in that**
the surroundings area (8) is captured by way of at least one ultrasound sensor (5, 6, 14, 15) on the motor vehicle.

17. Driver assistance system (2) which has at least one sensor (5, 6, 14, 15) and an evaluation unit and which is designed for carrying out a method according to one of the preceding claims.

18. Motor vehicle (1) having a driver assistance system (2) according to Claim 17.

## Revendications

1. Procédé de génération d'une carte d'environnement (12) d'une zone environnante (8) d'un véhicule automobile (1), dans lequel la zone environnante (8) est détectée à l'aide d'au moins un capteur (5, 6, 14, 15) côté véhicule, dans lequel, à au moins deux instants différents (T1, T2), une détection de la zone environnante (8) à l'aide de l'au moins un capteur (5, 6, 14, 15) est effectuée et en fonction des situations d'espace libre environnant détectées respectivement en fonction d'informations de capteur aux instants (T1, T2), il est décidé si un objet (11, 13) situé au moins supposément dans la zone environnante (8) dans au moins une situation d'espace libre environnant est, lors d'une mise à jour de la carte d'environnement (12), inclus dans la carte d'environnement (12) mise à jour, **caractérisé en ce qu'**une pluralité d'espaces libres de référence différents sont prédéfinis et, au moins en fonction d'une comparaison des situations d'espace libre environnant avec au moins un espace libre de référence et d'une valeur de confiance caractérisant une probabilité d'existence d'un objet (11, 13) dans une zone environnante (8) lors d'une opération de détection d'objet du capteur (5, 6, 14, 15), l'objet est rendu présent ou est rendu absent dans la carte d'environnement (12) mise à jour.

2. Procédé selon la revendication 1,
**caractérisé en ce**
**qu'**une probabilité d'existence d'un objet (11, 13) dans une zone environnante (8) lors d'une opération de détection d'objet du capteur (5, 6, 14, 15) est **caractérisée par** une valeur parmi plusieurs valeurs de confiance différentes.

3. Procédé selon la revendication 2,
**caractérisé en ce que**
l'association d'une valeur de confiance spécifique à une opération de détection d'objet est effectuée en fonction d'au moins une situation d'espace libre environnant détectée et/ou d'au moins un espace libre de référence prédéfini et/ou d'une comparaison d'au moins une situation d'espace libre environnant avec un espace libre de référence et/ou du type d'objet (11, 13).

4. Procédé selon l'une des revendications 1 à 3,
**caractérisé en ce**
**qu'**en fonction du nombre d'objets (11, 13) détectés dans les situations d'espace libre environnant et/ou du type d'objet (11, 13) détecté dans les situations d'espace libre environnant et/ou de la position locale d'un objet (11, 13) détecté dans au moins une situation d'espace libre environnant par rapport au véhicule automobile (1) et/ou d'une modification de position locale d'un objet (11, 13) détecté dans les situations d'espace libre environnant par rapport au véhicule automobile (1), un espace libre de référence spécifique est sélectionné à partir de la pluralité d'espaces libres de référence pour la comparaison.

5. Procédé selon l'une des revendications 1 à 4,
**caractérisé en ce**
**qu'**en fonction du nombre d'objets (11, 13) détectés dans les situations d'espace libre environnant et/ou du type d'objet (11, 13) détecté dans les situations d'espace libre environnant et/ou de la position locale d'un objet (11, 13) détecté dans au moins une situation d'espace libre environnant par rapport au véhicule automobile (1) et/ou d'une modification de position locale d'un objet (11, 13) détecté dans les situations d'espace libre environnant par rapport au véhicule automobile (1), le nombre des espaces libres de référence à prendre en compte pour la comparaison est déterminé.

6. Procédé selon l'une des revendications 3 à 5,
**caractérisé en ce**
**qu'**un premier espace libre de référence est défini comme espace libre d'objet, dans le cas duquel, pour l'évaluation d'un objet (11, 13), une distance de l'objet (11, 13) au capteur (5, 6, 14, 15) et l'orientation de l'objet (11, 13) par rapport au capteur (5, 6, 14, 15) sont prises en compte.

7. Procédé selon la revendication 6,
**caractérisé en ce que**,
pour la comparaison des situations d'espace libre environnant avec le premier espace libre de référence dans la première situation d'espace libre environnant, une valeur de distance détectée dans le cas d'une orientation spécifique de l'objet (11, 13), dans laquelle l'objet (11, 13) a été détecté pour la première fois, est enregistrée comme valeur de distance de référence, et au moins dans le cas d'une modification de position relative entre le capteur (5, 6, 14, 15) et l'objet (11, 13) se produisant dans la deuxième situation d'espace libre environnant, on vérifie si l'objet (11, 13) a été détecté dans la deuxième situation d'espace libre environnant, dans lequel, dans le cas où l'objet (11, 13) n'est plus détecté par le capteur (5, 6, 14, 15) dans la deuxième situation d'espace libre environnant, l'objet (11, 13) n'est plus affiché sur la carte d'environnement (12) mise à jour sur la base des critères du premier espace libre de référence, en particulier également d'une valeur de confiance spécifique.

8. Procédé selon l'une des revendications 1 à 7,
**caractérisé en ce**
**qu'**un deuxième espace libre de référence est défini comme espace libre de capteur, dans le cas duquel, pour l'évaluation d'un objet (11, 13), on détermine si l'objet se situe dans la région de détection du capteur (5, 6, 14, 15) dans une situation d'espace libre environnant mais n'est pas détecté comme objet (11, 13) par le capteur (5, 6, 14, 15).

9. Procédé selon la revendication 8,
**caractérisé en ce que**,
lors de la comparaison des situations d'espace libre environnant avec le deuxième espace libre de référence, un objet (11, 13) est affiché sur la carte d'environnement (12) mise à jour, en particulier également sur la base d'une valeur de confiance spécifique, lorsqu'un objet (11, 13) a été détecté par le capteur (5, 6, 14, 15) dans la première situation d'espace libre environnant mais, dans la deuxième situation d'espace libre environnant, l'objet (11, 13) n'a plus été détecté par le capteur (5, 6, 14, 15) mais on peut cependant supposer que l'objet (11, 13) se situe en outre dans la zone de détection (10) du capteur (5, 6, 14, 15).

10. Procédé selon l'une des revendications 1 à 9,
**caractérisé en ce**
**qu'**un troisième espace libre de référence est défini comme espace libre actif, dans le cas duquel l'espace entre le capteur (5, 6, 14, 15) et un objet (11, 13) détecté par le capteur (5, 6, 14, 15) est considéré comme dépourvu d'objets de hauteur comparable à celle de l'objet détecté (11, 13), en particulier dépourvu d'objets plus grands qu'une valeur seuil de hauteur.

11. Procédé selon la revendication 10,
**caractérisé en ce que**,
lors de la comparaison des situations d'espace libre environnant avec le troisième espace libre de référence, un objet supposément détecté entre le capteur (5, 6, 14, 15) et l'objet détecté (11, 13) dans au moins une situation d'espace libre environnant et dont la hauteur est en particulier comparable à celle de l'objet détecté (11, 13) n'est pas affiché sur la carte d'environnement (12) mise à jour, en particulier sur la base d'une valeur de confiance spécifique.

12. Procédé selon l'une des revendications 10 ou 11,
**caractérisé en ce**
**qu'**un quatrième espace libre de référence est défini comme espace libre d'arrière-plan, dans le cas duquel un objet (11, 13) est considéré dans un espace de la zone de détection (10) du capteur (5, 6, 14, 15) qui s'étend sur le côté opposé au capteur (5, 6, 14, 15) dans le prolongement de l'espace libre actif et/ou de l'espace libre de capteur.

13. Procédé selon la revendication 12,
**caractérisé en ce que**,
lors de la comparaison des situations d'espace libre environnant avec le quatrième espace libre de référence, en fonction d'une valeur de confiance d'un objet (11, 13) détecté dans l'espace libre d'arrière-plan au moins dans une situation d'espace libre environnant, on décide si l'objet (11, 13) est affiché sur la carte d'environnement (12) mise à jour.

14. Procédé selon l'une des revendications 1 à 13,
**caractérisé en ce que**,
lors d'une comparaison, lors de laquelle au moins deux espaces libres de référence différents sont pris en compte, et sur la base d'une comparaison avec un espace libre de référence, l'objet (11, 13) doit être affiché sur la carte d'environnement (12) mise à jour et, sur la base d'une comparaison avec un autre espace libre de référence, l'objet (11, 13) n'est pas affiché sur la carte d'environnement (12) mise à jour, une autre vérification de décision est effectuée.

15. Procédé selon la revendication 14,
**caractérisé en ce que**
la vérification de décision a lieu de telle sorte qu'un affichage sur la carte d'environnement (12) mise à jour a lieu lorsqu'au moins lors d'une comparaison avec un espace libre de référence un affichage doit avoir lieu ou les espaces libres de référence sont pondérés et en fonction de la pondération on décide si un affichage sur la carte d'environnement (12) mise à jour a lieu, ou sur la base des modifications des situations d'espace libre environnant obtenues en raison des séquences temporelles des deux situations d'espace libre environnant, on décide si un affichage sur la carte d'environnement (12) mise à jour a lieu.

16. Procédé selon l'une des revendications précédentes,
**caractérisé en ce que**
la zone environnante (8) est détectée à l'aide d'au moins un capteur à ultrasons (5, 6, 14, 15) côté véhicule.

17. Système d'aide à la conduite (2), lequel comprend au moins un capteur (5, 6, 14, 15) et une unité d'évaluation, et lequel est conçu pour la mise en œuvre d'un procédé selon l'une des revendications précédentes.

18. Véhicule automobile (1) comprenant un système d'aide à la conduite (2) selon la revendication 17.
